# EUROPÄISCHE PATENTANMELDUNG

(11) **EP 1 248 118 A2**
(43) Veröffentlichungstag der Anmeldung: **09.10.2002**
(21) Anmeldenummer: 02006156.0
(22) Anmeldetag: 19.03.2002
(51) Int. Cl.: G01S 11/02, G01S 11/12, G01S 11/14

(54) **System und Verfahren zur Positionsbestimmung**

(30) Priorität: 20.03.2001 DE 10113545
(71) Anmelder: Tenovis GmbH & Co. KG, 60326 Frankfurt am Main (DE)
(72) Erfinder: Odzinieks, Gunar, 29399 Wahrenholz (DE); Laue, Frank, 38321 Denkte (DE); Borgmann, Udo, 38302 Wolfenbüttel (DE)
(74) Vertreter: Pfeifer, Lothar

(57) **Zusammenfassung**

Es wird ein Positionsbestimmungssystem zur Bestimmung einer Position vorgeschlagen. Das System umfasst eine oder mehrere Positionssendevorrichtungen (10), eine Positionsempfangsvorrichtung oder mehrere Positionsempfangsvorrichtungen (20) und eine zentrale Verarbeitungsvorrichtung (30). Ein erstes Signal wird von der Positionssendevorrichtung über einen ersten Signalweg zu der Positionsempfangsvorrichtung gesendet. Die Positionsempfangsvorrichtung empfängt das erste Signal und wertet es aus. Ein zweiter Signalweg wird vorbereitet. Die Positionssendevorrichtung sendet ein zweites Signal über den zweiten Signalweg bei einer ersten vorbestimmten Zeit (t2). Die Positionsempfangsvorrichtung bestimmt, ob das zweite Signal in einer zweiten vorbestimmten Zeit (t_{G}) empfangen wird. Falls ja, wird eine Primärmeldung an die zentrale Verarbeitungsvorrichtung gesendet. Falls nein, wird eine Sekundärmeldung an die zentrale Verarbeitungsvorrichtung gesendet. Die zentrale Verarbeitungsvorrichtung bestimmt aus den empfangenen Meldungen die Position und zeigt diese an. Ferner werden ein Positionsbestimmungsverfahren, eine entsprechende Positionssendevorrichtung und eine entsprechende Positionsempfangsvorrichtung vorgeschlagen.

## Beschreibung

Die vorliegende Erfindung betrifft ein System, ein Verfahren und/oder entsprechende Vorrichtungen zur Positionsbestimmung, sowie insbesondere ein System, ein Verfahren und/oder entsprechende Vorrichtungen zur Positionsbestimmung einer Person, die einen mobilen Notsignalmelder betätigt.

### ZUGRUNDELIEGENDER STAND DER TECHNIK

Für die Bestimmung der Position einer Person in einem bestimmten Gebiet, beispielsweise in einem Gebäude oder in geschlossenen Räumen, sind verschiedene Verfahren und Systeme zur Positionsbestimmung in Gebrauch.

Wenn sich die Person in einem weitläufigen Gebäude, in Gefahrenbereichen oder in Sicherheitsbereichen aufhält, ist es wünschenswert bzw. vorgeschrieben, dass 'insbesondere in einem Notfall die Position der Person schnell und möglichst genau bestimmt werden kann. Hierzu werden im Allgemeinen mobile Notrufsender oder dergleichen eingesetzt, die die Person bei sich trägt und mit denen ein Notsignal abgegeben werden kann. Dann kann beispielsweise in einer Überwachungszentrale angezeigt werden, wo sich die Person befindet, und Hilfsmaßnahmen können gezielt und ohne zeitaufwendige Suche eingeleitet werden.

Für derartige Positionsbestimmungssysteme werden verschiedene Verfahren und Techniken eingesetzt.

Bekannt ist beispielsweise die Verwendung von Transpondern bei lokalen Positionierungssystemen (LPS). Ein Transponder ist beispielsweise ein mikroelektronischer Schaltkreis mit einer Sende- und Empfangsantenne, einer Steuerlogik, einem Datenspeicher und Energiespeicher. Die Aufgabe eines derartigen Schaltkreises besteht darin, gespeicherte Informationen mit einer sich in Sendereichweite befindlichen Lesestation drahtlos auszutauschen. Man unterscheidet beispielsweise zwischen einem passiven Transponder (ohne eigene Energiequelle) und einem aktiven Transponder (mit eigener Energiequelle). Bei Betätigung einer Notruftaste oder dergleichen wird beispielsweise einer Zentrale mitgeteilt, dass sich eine Person mit einem bestimmten Transponder in dem Bereich einer bestimmten Lesestation befindet und eine Notlage meldet. Dabei sind bedingt durch die Reichweite der Transponder eine Vielzahl von verteilten Lesestationen erforderlich, um eine ausreichende Abdeckung des zu überwachenden Gebiets zu erreichen.

Auch ein globales Positionierungssystem (GPS) kann zur Positionsbestimmung verwendet werden..Über sogenannte, GPS-Satelliten erhält ein tragbarer GPS-Empfänger ständig Signale, die dieser in geographische Informationen umwandelt. Dabei ist ein störungsfreier Empfang der Satellitensignale erforderlich. Die geographischen Informationen werden dann in einem Notfall der Zentrale übermittelt.

Weiterhin sind Positionsbestimmungssystem für geschlossene Räume bekannt, bei denen ortsfeste Standortsender, die sich in den entsprechenden Räumen befinden, dem tragbaren Positionssender eine Ortskennung übermitteln. Die Standortsender arbeiten dabei beispielsweise für die Übermittlung der Ortskennung nach dem induktiven Prinzip oder dem Infrarot-Prinzip. Das heißt, der mobile Positionssender dient auch als Ortsdatenempfänger. Bei Betätigung einer Sendetaste, beispielsweise in einem Notfall, wird von dem Positionssender neben seiner eigenen Kennung auch die empfangene Ortskennung an die Zentrale übermittelt. Zur Gewährleistung, dass die Ortskennung des aktuellen Ortes vorhanden ist, werden die Ortskennungsdaten ständig gesendet und empfangen. Die Energieversorgung der Positionssender wird durch Aufladen in entsprechenden Ladestationen gewährleistet. Beispiele für derartige Positionsbestimmungssysteme sind das PNA-2000-System mit Lokalisierung sowie das MINIPHON-alpha-2-secury-System, beide von der Firma Tenovis GmbH & Co. KG.

### DARSTELLUNG DER ERFINDUNG

Eine Aufgabe der vorliegenden Erfindung besteht darin, ein verbessertes Verfahren und/oder ein verbessertes System sowie entsprechende verbesserte Vorrichtungen zur Positionsbestimmung bereitzustellen.

Diese Aufgabe wird beispielsweise gelöst durch ein Verfahren zum Bestimmen einer Position einer Positionssendevorrichtung, die mit einer Positionsempfangsvorrichtung oder mehreren Positionsempfangsvorrichtungen kommuniziert, mit den Schritten Senden eines ersten Signals über einen ersten Signalweg, Empfangen und Verarbeiten des ersten Signals, Vorbereiten eines zweiten Signalwegs, Senden eines zweiten Signals über den zweiten Signalweg bei einer ersten vorbestimmten Zeit und Bestimmen, ob das zweite Signal über den zweiten Signalweg in einer zweiten vorbestimmten Zeit empfangen wird, wobei in dem Fall, dass das zweite Signal über den zweiten Datenweg in der zweiten vorbestimmten Zeit empfangen wird, eine Primärmeldung erzeugt wird und die Primärmeldung zur Bestimmung der Position verarbeitet wird.

Ferner wird die Aufgabe beispielsweise gelöst durch eine Positionssendevorrichtung, die mit einer externen Positionsempfangsvorrichtung kommuniziert, zur Bestimmung einer Position, mit einer Betätigungseinrichtung, einer Verarbeitungseinrichtung, einer ersten Sendeeinrichtung für einen ersten Signalweg und einer zweiten Sendeeinrichtung für einen zweiten Signalweg, wobei die Verarbeitungseinrichtung in Reaktion auf eine Betätigung der Betätigungseinrichtung veranlasst, dass die erste Sendeeinrichtung ein erstes Signal an die Positionsempfangsvorrichtung sendet und dass bei einer ersten vorbestimmten Zeit die zweite Sendeeinrichtung ein zweites Signal an die Positionsempfangsvorrichtung sendet.

Des Weiteren wird die Aufgabe beispielsweise gelöst durch eine Positionsempfangsvorrichtung, die mit einer externen Positionssendevorrichtung und einer externen zentralen Verarbeitungsvorrichtung kommuniziert, zur Bestimmung einer Position, mit einer Verarbeitungseinrichtung, einer ersten Empfangseinrichtung zum Empfangen über einen ersten Signalweg, einer zweiten Empfangseinrichtung zum Empfangen über einen zweiten Signalweg und einer Datenübertragungseinrichtung, wobei die "Verarbeitungseinrichtung eingerichtet ist, ein durch die erste Empfangseinrichtung empfangenes erstes Signal zu verarbeiten, die zweite Empfangseinrichtung in Reaktion darauf für einen Empfang vorzubereiten und zu bestimmen, ob das zweite Signal durch die zweite Empfangseinrichtung in einer zweiten vorbestimmten Zeit empfangen wird, wobei in dem Fall, dass das zweite Signal durch die zweite Empfangseinrichtung in der zweiten vorbestimmten Zeit empfangen wird, eine Primärmeldung erzeugt wird und durch die Datenübertragungseinrichtung zu der externen zentralen Verarbeitungsvorrichtung zur Bestimmung der Position gesendet wird.

Ferner wird die Aufgabe beispielsweise gelöst durch ein Positionsbestimmungssystem zur Bestimmung einer Position, mit einer Positionssendevorrichtung, einer Positionsempfangsvorrichtung oder mehreren Positionsempfangsvorrichtungen und einer zentralen Verarbeitungsvorrichtung, wobei ein erstes Signal von der Positionssendevorrichtung über einen ersten Signalweg zu der Positionsempfangsvorrichtung gesendet wird, die Positionsempfangsvorrichtung das erste Signal empfängt und auswertet sowie in Reaktion auf die Auswertung den Empfang eines zweiten Signals über einen zweiten Signalweg vorbereitet, die Positionssendevorrichtung das zweite Signal über den zweiten Signalweg bei einer ersten vorbestimmten Zeit sendet, die Positionsempfangsvorrichtung bestimmt, ob das zweite Signal über den zweiten Signalweg in einer zweiten vorbestimmten Zeit empfangen wird, wobei in dem Fall, dass das zweite Signal über den zweiten Datenweg in der zweiten vorbestimmten Zeit empfangen wird, die Positionsempfangsvorrichtung eine Primärmeldung erzeugt und über eine Datenleitung an die zentrale Verarbeitungsvorrichtung sendet, die zentrale Verarbeitungsvorrichtung die Primärmeldung zur Bestimmung der Position verarbeitet und die bestimmte Position anzeigt.

Weitere vorteilhafte Ausgestaltungen der Erfindung sind in den jeweiligen abhängigen Ansprüchen angeführt.

Durch die vorliegende Erfindung ist es auf einfache Weise möglich, die Position einer Positionssendevorrichtung (und damit einer Person) zu bestimmen und anzuzeigen.

Die zur Bestimmung der Position erforderlichen Ortsinformationen sind in den ortsfesten Positionsempfangsvorrichtungen abgelegt. Hierdurch ist ein einfacher Aufbau der tragbaren Positionssendevorrichtung möglich.

Außerdem verfügt die tragbare Positionssendevorrichtung über eine lange Standzeit, da nur dann Energie verbraucht wird, wenn eine Aktivierung, beispielsweise in einem Notfall, erfolgt ist. Ein permanenter Energieverbrauch, beispielsweise in Folge des. ständigen Empfangens von Ortsinformationen, ist nicht erforderlich. Die ortsfesten Positionsempfangsvorrichtungen können.hingegen an das Feststromnetz angeschlossen sein.

Wird bestimmt, dass die Positionsempfangsvorrichtung das zweite Signal nicht in der zweiten vorbestimmten Zeit empfängt, wird eine Sekundärmeldung erzeugt und über die' Datenleitung an die zentrale Verarbeitungsvorrichtung gesendet.

Die Primärmeldung umfasst eine durch das erste Signal in einem Datentelegramm übermittelte Kenninformation der Positionssendevorrichtung, eine in der Positionsempfangsvorrichtung gespeicherte Ortsinformation und eine Bestätigungsinformation über den Empfang des zweiten Signals. Demgegenüber umfasst die Sekundärmeldung eine durch das erste Signal in einem Datentelegramm übermittelte Kenninformation der Positionssendevorrichtung und eine in der Positionsempfangsvorrichtung gespeicherte
Ortsinformation. Die Bestätigungsinformation über den Empfang des zweiten Signals ist in der Sekundärmeldung nicht enthalten (bzw. es ist eine Information enthalten, dass das zweite Signal nicht in der zweiten vorbestimmten Zeit empfangen wurde).

Das heißt, jede angesprochene
Positionsempfangsvorrichtung meldet der zentralen Verarbeitungsvorrichtung, dass sie das erste Datentelegramm (das erste Signal) empfangen hat (Sekundärmeldung). Den Empfang des zweiten Datentelegramms (des zweiten Signals) dagegen meldet nur die Positionsempfangsvorrichtung, die dieses innerhalb der zweiten vorbestimmten Zeit empfängt (Primärmeldung). Diese Positionsempfangsvorrichtung sendet dann keine Sekundärmeldung.

Durch das Verwenden zweier unterschiedlicher Signalisierungen (erster und zweiter Signalweg) zwischen der Positionssendevorrichtung und der Positionsempfangsvorrichtung werden Fehlauslösungen vermieden. Dies wird durch eine geeignete Zeitablaufsteuerung für das Senden und Empfangen der Signale unterstützt. Der Empfang des zweiten Signals ist erst möglich, wenn das erste Signal zumindest teilweise . empfangen worden ist. Der Empfang des zweiten Signals ist beispielsweise lediglich innerhalb einer vorbestimmten Zeit möglich, so dass eine Fehlauslösung durch ein zufälliges Signal, das dem zweiten Signal ähnelt und als solches interpretiert werden kann, unwahrscheinlich ist.

Sowohl die Primärmeldung als auch die Sekundärmeldungen werden von den Positionsempfangsvorrichtungen der zentralen Verarbeitungsvorrichtung zugeführt. Diese verarbeitet die eingegangenen Meldungen und korreliert sie. Die zentrale Verarbeitungsvorrichtung weiß, wo sich jede Positionssendevorrichtung befindet. Wenn eine Primärmeldung vorhanden ist, kann eine spezifische Positionsbestimmung erfolgen, wohingegen in dem Fall, bei dem lediglich Sekundärmeldungen vorliegen, eine relative Positionsbestimmung möglich ist.

Durch eine Lageplandarstellung ist die zentrale Verarbeitungsvorrichtung in der Lage, das Ergebnis der Verarbeitung der eingegangenen Primär- und/oder Sekundärmeldungen zu visualisieren. Beispielsweise wird auf einer digitalisierten Karte des überwachten Gebiets eine Markierung angezeigt, die die Position darstellt. So ist eine schnelle Positionsbestimmung beispielsweise durch Hilfsmannschaften möglich.

Des Weiteren ist es möglich, dass die Positionsempfangsvorrichtungen die Signalstärke des ersten Signals bestimmen. Daraufhin werden, beispielsweise im Rahmen der Primär- und Sekundärmeldungen, die Signalstärke darstellende Informationen an die zentrale Verarbeitungsvorrichtung gesendet. Die zentrale Verarbeitungsvorrichtung berücksichtigt diese die Signalstärke darstellenden Informationen bei der Verarbeitung zur Positionsbestimmung. Mittels der Bestimmung der Signalstärke kann eine genauere Positionsbestimmung erreicht werden. Insbesondere in dem Fall, dass die zentrale Verarbeitungsvorrichtung lediglich auf Sekundärmeldungen zurückgreifen kann, ermöglichen Informationen bezüglich der Signalstärke bei den einzelnen Positionsempfangsvorrichtungen eine genauere Positionsbestimmung.

Die Positionsempfangsvorrichtung kann ferner über eine Positionsempfangsuntereinheit oder mehrere Positionsempfangsuntereinheiten verfügen. Die Positionsempfangsuntereinheiten sind in demselben Raum verteilt, in dem sich die (Haupt-) Positionsempfangsvorrichtung befindet, und sind mit dieser verbunden. Jede Positionsempfangsuntereinheit kann, wie die (Haupt-)Positionsempfangsvorrichtung, das erste und zweite Signal empfangen und an die Positionsempfangsvorrichtung weiterzuleiten. Hierdurch ist eine bessere Abdeckung beispielsweise eines geschlossenen Raumes möglich. Darüber hinaus wird eine Redundanz geschaffen, die eine erhöhte Ausfallsicherheit zur Folge hat. Ferner kann eine genauere Positionsbestimmung erreicht werden, wenn beispielsweise die Positionsempfangsuntereinheit eine Unterkennung mitsendet, die es ermöglicht, zu bestimmen, bei welcher Untereinheit der Empfang des Datentelegramms erfolgte.

Zusätzlich ist es möglich, auch bei den Positionsempfangsuntereinheiten die Signalstärke des ersten Signals zu bestimmen und die Signalstärke darstellende Informationen zu der (Haupt-) Positionsempfangsvorrichtung zu senden. Die (Haupt-) Positionsempfangsvorrichtung leitet die Informationen an die zentrale Verarbeitungsvorrichtung weiter, beispielsweise im Rahmen der Primär- und/oder Sekundärmeldung. Auch hierdurch kann die Positionsbestimmung verfeinert werden.

Für den ersten Signalweg (d.h. für die Übertragung des ersten Datentelegramms) wird beispielsweise ein Hochfrequenz-Funksignal verwendet, während für den zweiten Signalweg (d.h. für die Übertragung des zweiten Datentelegramms) ein akustisches Signal oder ein optisches Signal verwendet wird. Durch Ausnutzung der unterschiedlichen Ausbreitung zweier unterschiedlicher Signaltypen kann eine einfache Positionsbestimmung erfolgen. Ferner ist eine Anpassung der verwendeten Signaltypen an verschiedene Umgebungsbedingungen möglich.

Nachdem die Positionsbestimmung durch die zentrale Verarbeitungsvorrichtung erfolgt ist, ist es möglich, eine Bestätigungsmeldung bzw. Quittierungsmeldung über die Positionsempfangsvorrichtung an die Positionssendevorrichtung (und damit an eine Bedienungsperson) zu senden. Die Positionssendevorrichtung signalisiert dann den Empfang der Bestätigungsmeldung durch ein geeignetes Mittel, beispielsweise einen Summer, eine Leuchte oder dergleichen. Hierdurch ist es möglich, der Bedienungsperson anzuzeigen, dass beispielsweise der Notruf empfangen worden ist und die Position bestimmt worden ist.

Des Weiteren kann die Positionsempfangsvorrichtung eingerichtet sein, ihre Funktionalität zu überprüfen, d.h. beispielsweise die Empfangsbereitschaft entsprechender Empfangseinrichtungen und dergleichen. Das Ergebnis der Überprüfung wird an die zentrale Verarbeitungsvorrichtung gesendet. Diese verarbeitet das Prüfungsergebnis und berücksichtigt es, beispielsweise im Falle einer Störung der Positionsempfangsvorrichtung, bei der Positionsbestimmung. So ist es beispielsweise möglich, bei einer Positionbestimmung, wenn eine Positionsempfangsvorrichtung ausgefallen ist, durch die Meldungen zweier benachbarter Positionsempfangsvorrichtungen und dem Wissen über die Störung Rückschlüsse über den Standort der Positionssendevorrichtung zu ziehen.

### KURZE BESCHREIBUNG DER FIGUREN

Die Erfindung wird nachstehend anhand von Ausführungsbeispielen unter Bezugnahme auf die Zeichnung näher beschrieben. Es zeigen:
Fig. 1 eine schematische Darstellung eines Positionsbestimmungssystems,
Fig. 2 ein Blockschaltbild einer Positionssendevorrichtung und einer Positionsempfangsvorrichtung,
Figuren 3A und 3B Zeitablaufdiagramme für Signale in dem Positionsbestimmungssystem,
Figuren 4A, 4B und 4C ein Flussdiagramm zur Veranschaulichung eines Verfahrens zur Positionsbestimmung,
Figuren 5A, 5B und 5C Anwendungsbeispiele des Positionsbestimmungssystems,
Fig. 6 ein Blockschaltbild einer Positionssendevorrichtung und einer Positionsempfangsvorrichtung,
Fig. 7 ein Blockschaltbild einer Positionssendevorrichtung und einer Positionsempfangsvorrichtung und
Fig. 8 eine schematische Darstellung ein'es Positionsbestimmungssystems.

### BESCHREIBUNG DER BEVORZUGTEN AUSFÜHRUNGSBEIPIELE

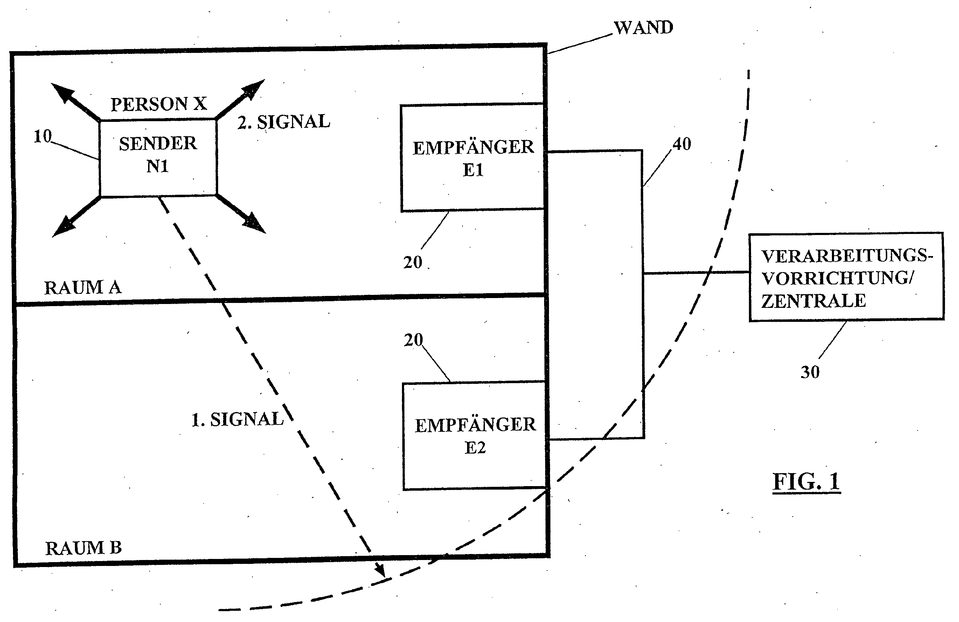

In Fig. 1 ist ein erstes Ausführungsbeispiel eines Positionsbestimmungssystems gezeigt.

Gemäß Fig. 1 bezeichnet Bezugszeichen 10 eine Positionssendevorrichtung, die beispielsweise von einer Person X getragen wird. Bezugszeichen 20 bezeichnet Positionsempfangsvorrichtungen, die Signale von der Positionssendevorrichtung 10 empfängt. Bezugszeichen 30 bezeichnet eine zentrale Verarbeitungsvorrichtung, die beispielsweise in einer Notrufzentrale installiert ist und mit den Positionsempfangsvorrichtungen 20 über eine Datenleitung 40 in Verbindung steht.

Die (nachstehend kurz als Sender N1 bezeichnete) Positionssendevorrichtung 10 sowie eine erste (nachstehend kurz als Empfänger E1 bezeichnete)
Positionsempfangsvorrichtung 20 befinden sich in einem Raum A. Eine zweite (nachstehend kurz als Empfänger E2 bezeichnete) Positionsempfangsvorrichtung 20 befindet sich in einem Raum B. Die Räume A und B sind durch Wände abgegrenzt.

Wird der Sender N1 durch die Person X aktiviert, so wird ein in Fig. 1 durch eine gestrichelte Linie und einen gestrichelten Kreisbogen dargestelltes erstes Signal ausgegeben. Das erste Signal ist beispielsweise ein Hochfrequenz-Funksignal (bzw. HF-Signal) und überträgt ein codiertes Datentelegramm. Mit diesem ersten Signal bzw. ersten Datentelegramm gibt'der Sender N1 beispielsweise an, dass eine Aktivierung erfolgt ist (d.h., dass ein Notfall vorliegt), sowie eine zugehörige Senderkennung (d.h. einen spezifischen Code zur Identifikation des Senders, hier beispielsweise "N1").

Wie es in Fig. 1 gezeigt ist, wird das erste Signal sowohl von dem Empfänger E1 in Raum A als auch von dem Empfänger E2 in Raum B empfangen. Anders ausgedrückt, das erste Signal wird von den den Raum A begrenzenden Wänden nicht (oder zumindest nur teilweise) abgeschirmt.

Nachdem das erste Signal gesendet worden ist, sendet der Sender N1 selbstständig ein zweites Signal (in Fig. 1 durch die durchgezogenen Pfeile angezeigt). Das zweite Signal ist beispielsweise ein akustisches Signal, vorzugsweise im hörbaren Bereich, oder ein optisches Signal, beispielsweise ein Infrarotsignal. Das zweite
Signal kann ebenfalls ein Datentelegramm sein, das im Wesentlichen die selben Informationen wie das erste Datentelegramm umfasst, oder lediglich ein Trägersignal darstellen, dessen Vorhandensein in den Empfängern erfasst wird. Im Gegensatz zu dem ersten Signal wird das zweite Signal von dem Empfänger E1 in Raum A, nicht aber von dem in dem benachbarten Raum B installierten Empfänger E2 empfangen. Das heißt, das zweite Signal wird durch die den Raum A begrenzenden Wände blockiert bzw. abgeschirmt.

Nun geben die Empfänger E1 und E2 über die Datenleitung 40 jeweils entsprechende Meldungen an die zentrale Verarbeitungsvorrichtung 30 ab. Dabei meldet der Empfänger E1 beispielsweise den Empfang eines Notsignals, die Kennung des Senders N1 (d.h. den Inhalt des ersten Datentelegramms), eine Ortskennung, wo sich der Empfänger E1 befindet (beispielsweise "E1 in Raum A") sowie eine Bestätigungsinformation, dass das zweite Signal empfangen worden ist. Diese Informationen bilden eine sogenannte Primärmeldung.

Es ist dabei zu beachten, dass die Ortskennung in den jeweiligen Empfängern E1, E2 gespeichert ist. Als Ortskennung kann auch lediglich die Kennung des Empfängers verwendet werden (beispielsweise "E1", "E2"), zu denen in der zentralen Verarbeitungsvorrichtung später die entsprechende Position zugeordnet wird (Vergleich Kennung des Empfängers mit gespeicherten Informationen).

Demgegenüber meldet der Empfänger E2 zwar auch den Empfang eines Notsignals, die Kennung des Senders N1 (d.h. den Inhalt des ersten Datentelegramms) und eine Ortskennung, wo sich der Empfänger E2 befindet (beispielsweise "E2 in Raum B"), die Bestätigungsinformation über den Empfang des zweiten Signals fehlt jedoch. Die von dem Empfänger E2 gesendete Meldung wird als Sekundärmeldung bezeichnet.

Die zentrale Verarbeitungsvorrichtung 30 wertet nun die empfangene Primärmeldung und Sekundärmeldung aus. Als zentrale Verarbeitungsvorrichtung wird beispielsweise ein Computer oder dergleichen verwendet. Sie befindet sich beispielsweise in einer Überwachungszentrale in einem anderen Raum des zu überwachenden Gebäudes oder dergleichen. Sie umfasst einen Speicher, in dem Ortsinformationen sowie Vergleichsdaten zur Zuordnung einer Ortskennung zu einem Ort gespeichert sind.

Mittels geeigneter Verarbeitungsalgorithmen stellt die zentrale Verarbeitungsvorrichtung 30, nun beispielsweise fest, dass ein Notruf erfolgt ist und dass eine Primärmeldung vorhanden ist, dass also die Position spezifisch bestimmt werden kann (nämlich dass sich der Sender N1 in dem von Empfänger E1 überwachten Raum A befindet).

Dieses Verarbeitungsergebnis wird nun beispielsweise auf einer Lageplandarstellung angezeigt.' Die Lageplandarstellung ist beispielsweise eine digitalisierte Darstellung der von dem Positionsbestimmungssystem überwachten Bereichen. Auf einer (nicht gezeigten) Anzeigevorrichtung kann die Lageplandarstellung sowie ein Anzeigeelement zur Anzeige der bestimmten Position angezeigt werden. So kann die Position schnell und genau bestimmt werden.

Die zentrale Verarbeitungsvorrichtung 30 kann neben der Auswertung der Meldungen und der Positionsbestimmung auch weitere Aufgaben erfüllen. Beispielsweise ist es möglich, über die zentrale Verarbeitungsvorrichtung eine Protokollierung von Überwachungsereignissen .durchzuführen. Ebenso ist eine Weiterleitung eines empfangenen Notrufs (beispielsweise an einen öffentlichen Rettungsdienst oder dergleichen) möglich. Schließlich übernimmt die zentrale Verarbeitungsvorrichtung auch noch die Alarmierung vor Ort befindlicher Hilfsmannschaften, beispielsweise durch einen Summer, eine Sirene, eine Leuchte oder dergleichen.

Die Datenleitung 40 zur Übertragung der Primärmeldung bzw. der Sekundärmeldung von der Positionsempfangsvorrichtung 20 zu der zentralen Verarbeitungsvorrichtung 30 ist beispielsweise eine feste Verbindung, wie ein Glasfaserkabel oder ein Kupferdrahtkabel, oder eine drahtlose Verbindung, wie eine Funkverbindung oder eine optische Verbindung (Laser oder dergleichen).

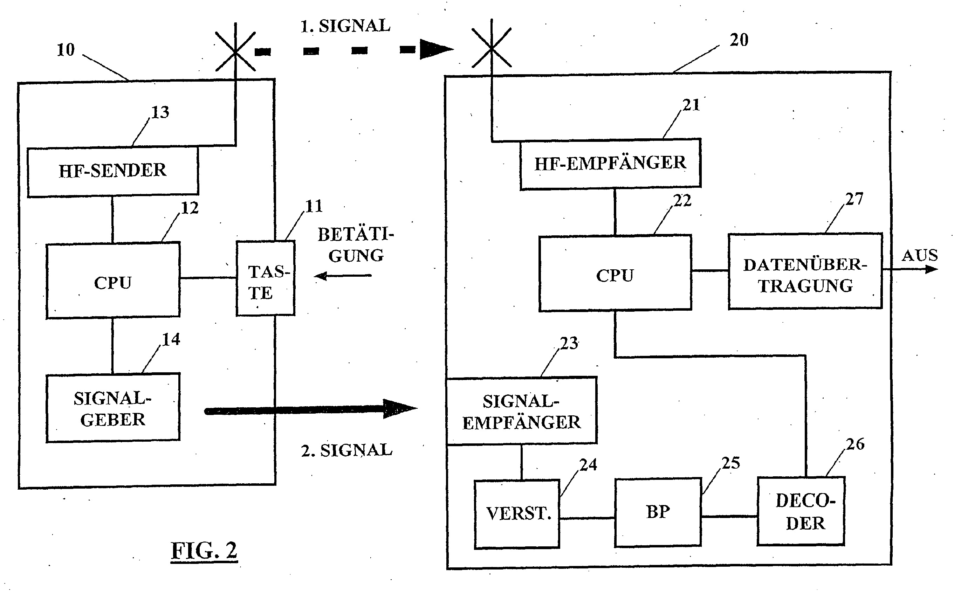

In Fig. 2 ist ein Beispiel einer Positionssendevorrichtung 10 und einer Positionsempfangsvorrichtung 20 gezeigt.

In Fig. 2 bezeichnet bei der Positionssendevorrichtung 10 Bezugszeichen 11 eine Betätigungseinrichtung, die beispielsweise von einer Bedienungsperson zur Aktivierung der Positionssendevorrichtung 10 betätigt wird. Die Betätigungseinrichtung 11 kann beispielsweise eine Drucktaste oder ein mit einem Seil gekoppelter Abrissschalter oder dergleichen sein. Ebenso ist ein durch einen Lagesensor, der die Lage der Positionssendevorrichtung 10 (und damit der Bedienungsperson) erfasst, angesteuerter Kontakt möglich.

Bezugszeichen 12 bezeichnet eine nachstehend als CPU bezeichnete Verarbeitungseinrichtung. Die CPU 12 steuert alle in der Positionssendevorrichtung 10 ausgeführten . Vorgänge und ist mit einem (nicht gezeigten) Speicher zur Speicherung von für die Positionssendevorrichtung 10 spezifischen Daten verbunden. In dem Speicher ist beispielsweise die vorstehend genannte Senderkennung (N1) gespeichert. Die CPU 12 umfasst ferner eine Zeitsteuerungsschaltung, mittels der eine nachstehend beschriebene Zeitsteuerung der Positionssendevorrichtung 10 ermöglicht wird.

Bezugszeichen 13 bezeichnet eine erste Sendeeinrichtung. Die erste Sendeeinrichtung 13 ist beispielsweise ein Hochfrequenz-Sender bzw. HF-Sender, der über eine Antenne das erste Signal (das erste Datentelegramm) nach einer Ansteuerung durch die Verarbeitungseinrichtung 12 mittels'. einer HF-Funkverbindung sendet.

Bezugszeichen 14 bezeichnet eine zweite Sendeeinrichtung. Die zweite Sendeeinrichtung 14 ist beispielsweise ein akustischer oder ein optischer Signalgeber, der das zweite Signal (das zweite Datentelegramm) nach einer Ansteuerung durch die Verarbeitungseinrichtung 12 mittels einer akustischen bzw. optischen Signalübertragung sendet. Das akustische Signal ist dabei vorzugsweise im hörbaren Bereich. Ebenso ist aber auch ein Ultraschallsignal oder dergleichen mögliche Im Falle einer optischen Signalübertragung wird vorzugsweise ein Infrarotsignal verwendet.

Die Positionssendevorrichtung 10 umfasst ferner eine nicht gezeigte Energieversorgungseinrichtung, wie beispielsweise eine Batterie, die alle Elemente der Positionssendevorrichtung 10 mit Strom versorgt. Die Energieversorgungseinrichtung ist dabei vorzugsweise nicht wiederaufladbar, kann aber wiederaufladbar sein.

Bei der Positionsempfangsvorrichtung 20 bezeichnet Bezugszeichen 21 eine erste Empfangseinrichtung. Die erste Empfangseinrichtung 21 entspricht der ersten Sendeeinrichtung 13 der Positionssendevorrichtung 10. Das heißt beispielsweise, dass die erste Empfangseinrichtung 21 eine HF-Empfangseinrichtung ist, die über eine Antenne das erste Signal über die HF-Funkverbindung empfängt.

Bezugszeichen 22 bezeichnet eine Verarbeitungseinrichtung (CPU). Äquivalent zu der CPU 12 der Positionssendevorrichtung 10 steuert die Verarbeitungseinrichtung 22 alle in der
Positionsempfangsvorrichtung 20 auszuführenden Vorgänge. Ferner ist die Verarbeitungseinrichtung 22 mit einem (nicht gezeigten) Speicher zur Speicherung von für die Positionsempfangsvorrichtung 20 spezifischen Daten verbunden. In diesem Speicher ist beispielsweise die vorstehend genannte Ortskennung ("E1 in Raum A") gespeichert. Die Verarbeitungseinrichtung 22 umfasst ferner ebenfalls eine Zeitsteuerungsschaltung, mittels der eine nachstehend beschriebene. Zeitsteuerung der Positionsempfangsvorrichtung 20 ermöglicht wird.

Bezugszeichen 23 bezeichnet eine zweite Empfangseinrichtung. Die zweite Empfangseinrichtung 23 entspricht der zweiten Sendeeinrichtung 14 der Positionssendevorrichtung 10. Das heißt beispielsweise, dass die zweite Empfangseinrichtung 23 ein akustischer oder ein optischer Signalempfänger ist, der das zweite Signal (das zweite Datentelegramm) über eine akustische bzw. optische Signalübertragung empfängt. Im Falle einer akustischen Signalübertragung umfasst die zweite Empfangseinrichtung beispielsweise einen piezoelektrischen Wandler, ein dynamisches Mikrophon oder dergleichen, welche das akustische Signal in ein elektrisches Signal umwandeln.

Mit den Bezugszeichen 24, 25 und 26 sind Einrichtungen zur Bearbeitung des umgewandelten zweiten Signals bezeichnet. Diese Einrichtungen 24, 25 und 26 sind dabei an die verwendete Signalübertragung des zweiten Signals und die Spezifikationen der zweiten Empfangseinrichtung 23 anpassbar. In dem Fall einer akustischen Signalübertragung wird beispielsweise ein Verstärker 24 zur Verstärkung des von dem piezoelektrischen Wandler umgewandelten elektrischen Signals, ein Bandpass 25 zur .Filterung des verstärkten elektrischen Signals und eine Decodiereinrichtung 26 zur Decodierung von in dem elektrischen Signal enthaltenen Informationen verwendet. Es ist jedoch ersichtlich, dass auch andere Elemente zu den vorstehend genannten Einrichtungen zur Bearbeitung des zweiten Signals hinzugefügt werden können.

Bezugszeichen 27 bezeichnet eine Datenübertragungseinrichtung. Die Datenübertragungseinrichtung 27 dient dazu, Meldungen von der Verarbeitungseinrichtung 22 der
Positionsempfangsvorrichtung 20 über die Datenleitung 40 an die zentrale Verarbeitungseinrichtung 30 zu übertragen. Dabei ist die Datenübertragungseinrichtung 27 an die verwendete Verbindungsart der Datenleitung 40 angepasst.

Betätigt die Bedienungsperson die Betätigungseinrichtung 11, wird die Stromversorgung der Positionssendevorrichtung 10 eingeschaltet. Die CPU 12 steuert daraufhin die erste Sendevorrichtung 13 an, das erste Datentelegramm zu senden. Gleichzeitig beginnt die Zeitsteuerungsschaltung, die Zeit ab dem Senden des ersten Datentelegramms zu erfassen. Nach einer ersten vorbestimmten Zeit steuert die CPU 12 die zweite Sendeeinrichtung 14 an, das zweite Datentelegramm zu senden.

Empfängt die erste Empfangseinrichtung 21 der Positionsempfangsvorrichtung 20 das erste Datentelegramm, überträgt sie dieses zu der Verarbeitungseinrichtung 22. Die Verarbeitungseinrichtung wertet das empfangene Datentelegramm aus und erfasst den Notruf sowie die Senderkennung. Diese werden beispielsweise zwischengespeichert. Ferner wird die Zeitsteuerungsschaltung der Verarbeitungseinrichtung 22 gestartet, die die Zeit seit dem Empfang des ersten Datentelegramms erfasst. Des Weiteren schaltet die Verarbeitungseinrichtung 22 die zweite Empfangseinrichtung 23 in Bereitschaft, damit diese zum Empfang des zweiten Datentelegramms bereit ist.

Die Verarbeitungseinrichtung 22 bestimmt unter Verwendung der Zeitsteuerungsschaltung, ob in einer zweiten vorbestimmten Zeit das zweite Datentelegramm empfangen worden ist. Nach einer dritten vorbestimmten Zeit wird dann durch die Verarbeitungseinrichtung 22 eine Meldung für die zentrale Verarbeitungsvorrichtung 30 erzeugt und über die Datenübertragungseinrichtung 27 gesendet.

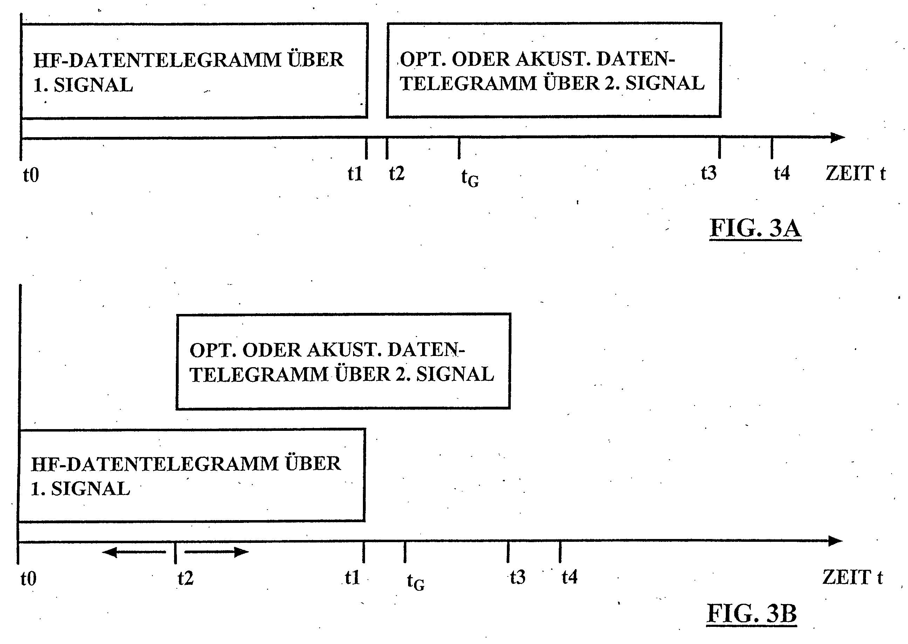

In Fig. 3A ist ein Beispiel eines Zeitablaufdiagramms für die Signale bzw. Datentelegramme in dem Positionsbestimmungssystem gezeigt, mit dem die vorstehend genannte Zeitsteuerung veranschaulicht wird.

Zu einem Zeitpunkt t0 wird das Senden des ersten Datentelegramms von der Zeitsteuerungsschaltung der CPU 12 der Positionssendevorrichtung 10 erfasst. Wird zur Signalübertragung eine HF-Funkverbindung verwendet, erfasst die Zeitsteuerungsschaltung der Verarbeitungseinrichtung 22 der Positionsempfangsvorrichtung 20 nahezu gleichzeitig den Zeitpunkt des Beginns des Empfangs des ersten Datentelegramms. Die beiden Zeitsteuerungsschaltungen der Positionssendevorrichtung 10 und der Positionsempfangsvorrichtung 20 können damit als synchronisiert betrachtet werden.

Die Zeitdauer, die zur Übertragung des ersten Datentelegramms erforderlich, ist im voraus festgelegt. Sie beträgt beispielsweise t1. Dieser Zeitpunkt t1 kann auch als der Zeitpunkt verwendet werden, bei dem die Verarbeitungseinrichtung 22 der Positionsempfangsvorrichtung 20 die zweite Empfangseinrichtung 23 in Bereitschaft schaltet.

Zu einem Zeitpunkt t2 veranlasst die CPU 12 der Positionssendevorrichtung 10 das Senden des zweiten Datentelegramms durch die zweite Sendeeinrichtung 14. Der Zeitpunkt t2 ist also die vorstehend genannte erste vorbestimmte Zeit. Es ist zu beachten, dass der Zeitpunkt zum Bereitschalten der zweiten Empfangsvorrichtung 23 der Positionsempfangsvorrichtung 20 so gewählt ist, dass die zweite Empfangseinrichtung zum Empfang bereit ist, bevor der Zeitpunkt t2 erreicht ist (beispielsweise t1).

Die Zeitdauer, die zur Übertragung des zweiten Datentelegramms erforderlich ist, endet bei t3. Auch diese Zeitdauer (nämlich t3 - t2) kann bereits im voraus definiert sein. Das heißt, zum Zeitpunkt t3 beendet die Positionssendevorrichtung 10 das Senden.

Durch die Zeitsteuerungsschaltung der Verarbeitungseinrichtung 22 der Positionsempfangsvorrichtung 20 wird ein Zeitpunkt t_{G} definiert. Der Zeitpunkt t_{G} definiert den Zeitpunkt, bis zu dem die zweite Empfangseinrichtung 23 in Bereitschaft geschaltet ist (dies entspricht der vorstehend genannten zweiten vorbestimmten Zeit). Das heißt, empfängt die zweite Empfangseinrichtung 23 bis zu dem Zeitpunkt t_{G} kein zweites Datentelegramm, schaltet die Verarbeitungseinrichtung 22 die zweite Empfangseinrichtung 23 ab. Wird jedoch ein zweites Datentelegramm empfangen, bleibt die zweite Empfangseinrichtung 23 in Betrieb. Der Zeitpunkt t_{G} ist dabei beliebig wählbar. Es ist lediglich zu gewährleisten, dass das zweite Datentelegramm die zweite Empfangseinrichtung 23 erreicht haben kann, also zumindest bei t2 plus einer entsprechenden Laufzeit für das zweite Signal. Durch geeignete Wahl des Zeitpunkts t_{G} kann beispielsweise eine fehlerhafte Erfassung eines Signals verhindert werden, das dem zweiten Signal zwar ähnelt, dieses aber tatsächlich nicht ist.

Zu einem Zeitpunkt t4 veranlasst die Verarbeitungseinrichtung 22 der Positionsempfangsvorrichtung 20, entweder eine Primärmeldung (falls das zweite Datentelegramm vor t_{G} empfangen wurde) oder eine Sekundärmeldung (falls kein zweites Datentelegramm empfangen wurde) zu senden'. Der Zeitpunkt t4 ist dabei beispielsweise so eingestellt, dass das zweite Datentelegramm sicher empfangen wurde und eine entsprechende Auswertung erfolgen konnte (d.h. t4 = t_{G} + (t3 - t2) + Verarbeitungszeit). t4 entspricht also der vorstehend genannten dritten vorbestimmten Zeit. Dabei ist zu beachten, dass das zweite Datentelegramm beispielsweise lediglich als vorhanden erfasst werden muss, dass also keine zusätzlichen Daten empfangen und ausgewertet werden müssen. Dann gilt das zweite' Datentelegramm als empfangen, sobald das zweite Signal als vorhanden erfasst wird. In diesem Fall kann t4 dann beispielsweise t_{G} (bzw. t_{G} plus Verarbeitungszeit) sein, oder t4 kann beispielsweise t2 plus der Signallaufzeit des zweiten Signals plus der Verarbeitungszeit sein.

Die Dauer für die gesamte Zeitsteuerung, d.h. von Zeitpunkt t0 bis zum Zeitpunkt t4, beträgt beispielsweise 1 Sekunde.

In Fig. 3B ist ein weiteres Beispiel eines Zeitablaufdiagramms für die Signale bzw. Datentelegramme in dem Positionsbestimmungssystem gezeigt.

Fig. 3B entspricht dabei im Wesentlichen Fig. 3A. Der Unterschied zu dem in Fig. 3A gezeigten Beispiel ist, . dass das zweite Signal (das zweite Datentelegramm) bereits gesendet wird, wenn das erste Datentelegramm noch gesendet wird. Der Zeitpunkt t2 gemäß Fig. 3B liegt also vor t1. t2 kann dabei beliebig gewählt werden (durch die Pfeile angezeigt). Es ist auch möglich, t2 gleich t0 zu wählen. Dabei ist zu beachten, dass die Sendevorrichtung 10 die erste und die zweite Sendeeinrichtung 13, 14 gleichzeitig auslöst. Die weiteren Zeitpunkte t3, t4 und t_{G} verschieben sich entsprechend. Hierdurch wird beispielsweise die Zeitspanne verkürzt, bis eine Positionsbestimmung erfolgen kann.

Bei dem in Fig. 3B gezeigten Beispiel beinhaltet das erste Datentelegramm beispielsweise einen Datenblock, der zu Beginn des Datentelegramms gesendet wird, zur Initialisierung der Aktivierung des zweiten Signalwegs (der zweiten Empfangseinrichtung 23) auf der Empfängerseite. Das heißt, die zweite Empfangseinrichtung 23 wird empfangsbereit geschaltet, während die erste Empfangseinrichtung 21 noch das erste Datentelegramm empfängt.

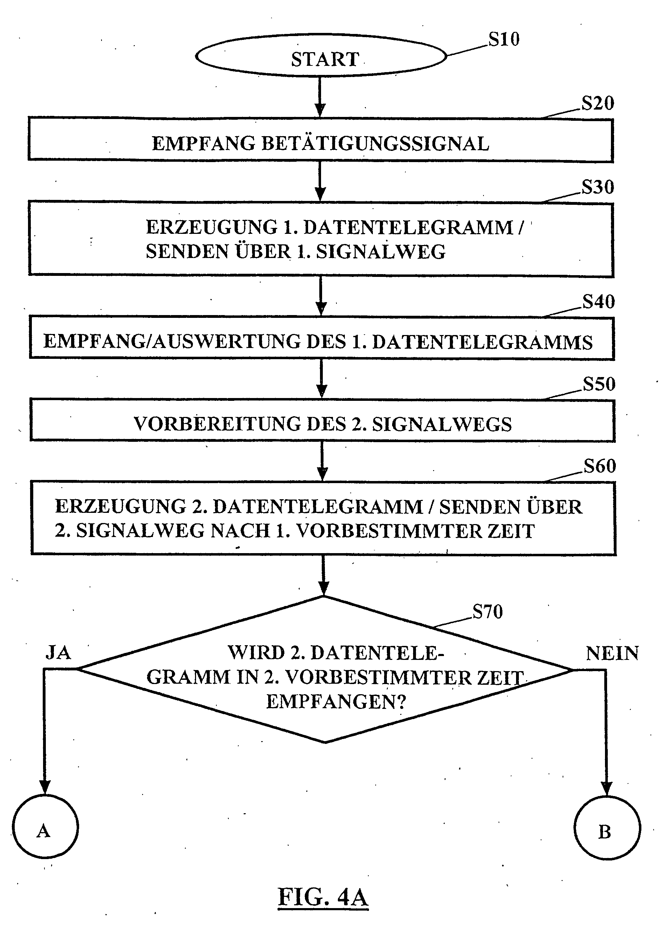

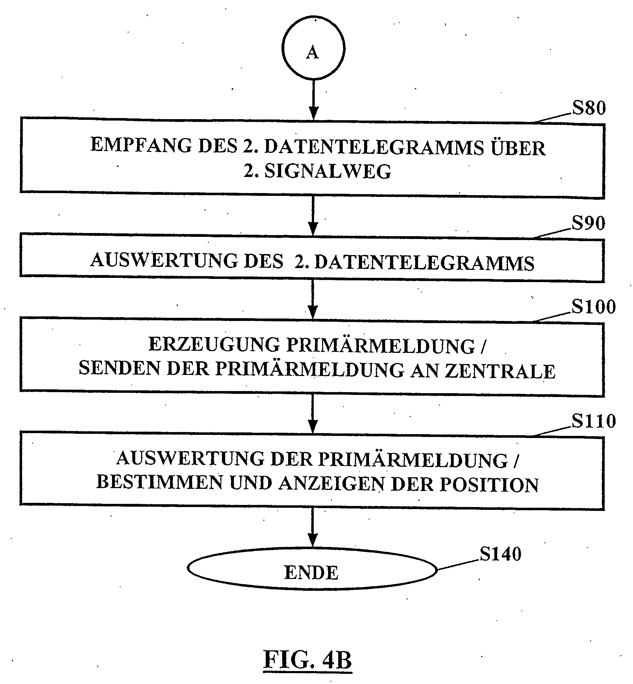

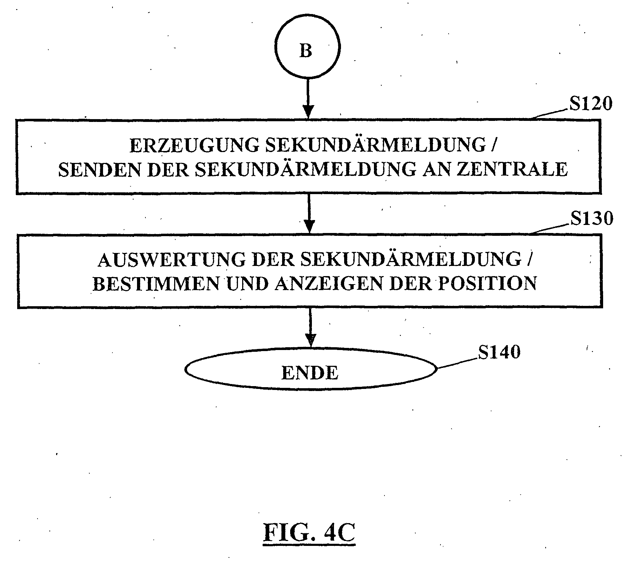

Die Arbeitsweise des vorstehend beschriebenen Positionsbestimmungssystems ist ausführlicher, unter Bezugnahme auf die in den Figuren 4A bis 4C gezeigten Flussdiagramme beschrieben.

Gemäß Fig. 4A wird in Schritt S10 das Positionsbestimmungsverfahren gestartet. Dies erfolgt beispielsweise durch Betätigen des Betätigungselements 11 der Positionssendevorrichtung 10, wenn eine Bedienungsperson (die Person X) einen Notfall melden will. Daraufhin wird beispielsweise die Energieversorgung der Positionssendevorrichtung 10 gestartet. Da die Energieversorgung erst bei Bedarf eingeschaltet wird, verbraucht die Positionssendevorrichtung 10 keinen Strom, solange sie nicht durch die Betätigungseinrichtung eingeschaltet wird.

In Schritt S20 wird von der CPU 12 der Positionssendevorrichtung 10 ein Betätigungssignal von der Betätigungseinrichtung 11 empfangen. In Reaktion auf das Betätigungssignal erzeugt die CPU 12 in Schritt S30 das erste Datentelegramm, das einen Notfall anzeigt sowie die Senderkennung der Positionssendevorrichtung 10 umfasst. Das erste Datentelegramm wird dann als erstes Signal von der ersten Sendeeinrichtung 13 gesendet.

In Schritt S40 wird das erste Signal von der Positionsempfangsvorrichtung 20 über die erste Empfangseinrichtung 21 empfangen und von der Verarbeitungseinrichtung 22 ausgewertet. Die Verarbeitungseinrichtung 22 erkennt bei der Auswertung des ersten Datentelegramms, dass ein Notfall vorliegt, und bestimmt über die Senderkennung, welche Positionssendevorrichtung 10 gesendet hat. In Reaktion darauf wird in Schritt S50 die zweite Empfangseinrichtung 23 der Positionsempfangsvorrichtung 20 in Bereitschaft geschaltet, um das zweite Signal zu empfangen.

Mittlerweile wird in Schritt S60 von der CPU 12 der Positionssendevorrichtung 10 das zweite Datentelegramm erzeugt und in der ersten vorbestimmten Zeit t2 über die zweite Sendeeinrichtung 14 als zweites Signal gesendet.

In Schritt S70 wird von der Verarbeitungseinrichtung 22 der Positionsempfangsvorrichtung 20 bestimmt, ob das zweite Datentelegramm in der zweiten vorbestimmten Zeit t_{G} empfangen wird.

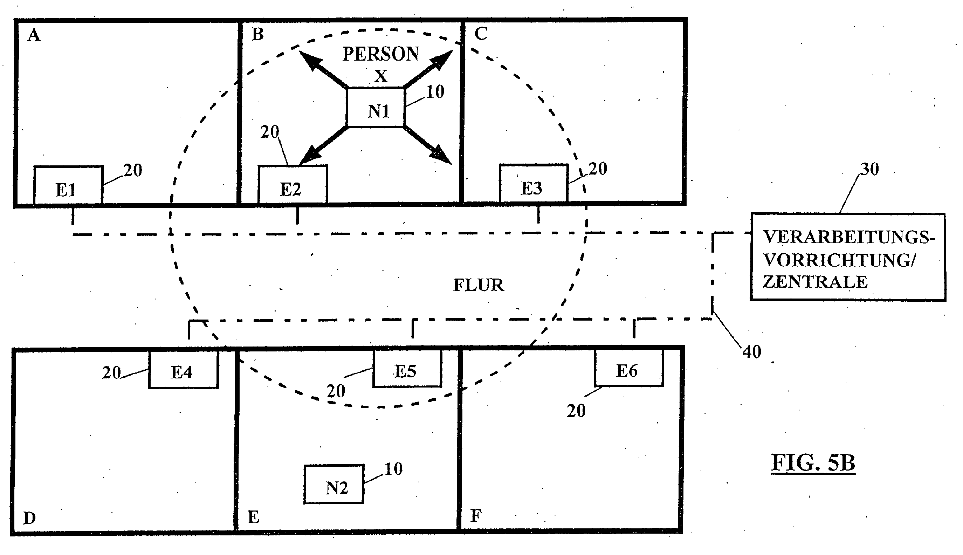

Ist das Ergebnis der Bestimmung positiv, wird das zweite Signal in Schritt S80 (Fig. 5B) durch die zweite Empfangseinrichtung 23 aufgenommen und über die Bearbeitungseinrichtungen 24, 25 und 26 an die Verarbeitungseinrichtung 22 weitergeleitet. Die Verarbeitungseinrichtung 22 wertet das zweite Datentelegramm aus (Schritt S90). Daraufhin wird von der Verarbeitungseinrichtung 22 in Schritt S100 die Primärmeldung erzeugt und über die Datenübertragungseinrichtung 27 und die Datenleitung 40 an die zentrale Verarbeitungsvorrichtung 30'gesendet.

Die zentrale Verarbeitungsvorrichtung 30 wertet in Schritt S110 die eingegangene, Meldung aus und erkennt, dass es sich um eine Primärmeldung handelt. Sie verarbeitet die in. der Primärmeldung enthaltenen Informationen (Notfall, Senderkennung, Ortskennung, Bestätigung bezüglich des zweiten Signals) und korreliert diese mit den vorhandenen Informationen (beispielsweise Verknüpfung der Ortskennung mit entsprechenden Koordinateninformationen) zur Bestimmung der Position. Die so bestimmte Position wird daraufhin durch die zentrale Verarbeitungsvorrichtung 30 beispielsweise durch eine Lageplandarstellung angezeigt. Damit ist die Positionsbestimmung beendet (Schritt S140).

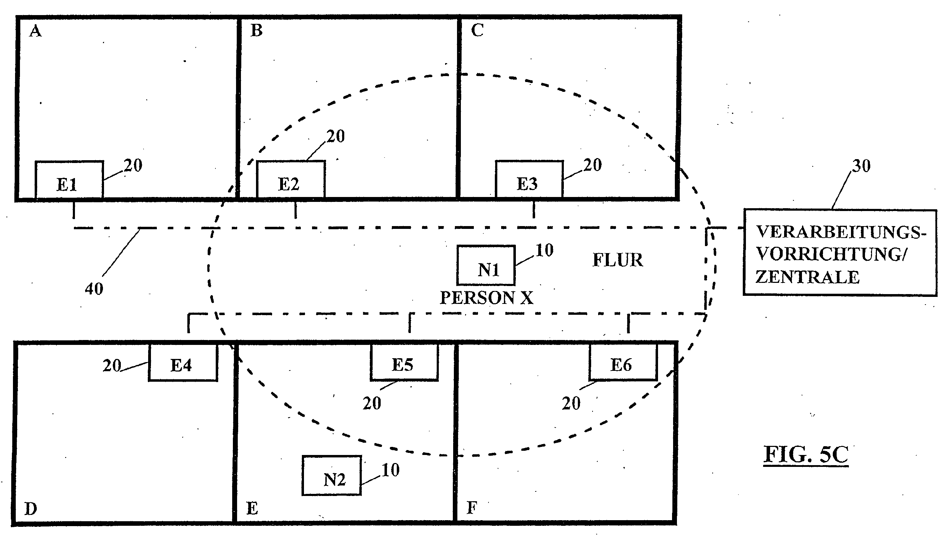

Wenn bei der Positionsempfangsvorrichtung 20 die Bestimmung in Schritt S70 negativ ausgefallen ist (d.h., es wurde kein zweites Signal in der zweiten vorbestimmten Zeit t_{G} empfangen), erzeugt die Verarbeitungseinrichtung 22 in Schritt S120 (Fig. 5C) die Sekundärmeldung und sendet diese über die Datenübertragungseinrichtung 27 und die Datenleitung 40 an die zentrale Verarbeitungsvorrichtung 30.

Die zentrale Verarbeitungsvorrichtung 30 wertet in Schritt S130 die eingegangene Meldung aus und erkennt, dass es sich um eine Sekundärmeldung handelt. Sie verarbeitet die in der Sekundärmeldung enthaltenen Informationen (Notfall, Senderkennung, Ortskennung) und korreliert diese mit den vorhandenen Informationen (beispielsweise Verknüpfung der Ortskennung mit entsprechenden Koordinateninformationen) zur Bestimmung der Position. Die so bestimmte Position wird daraufhin durch die zentrale Verarbeitungsvorrichtung 30 beispielsweise durch eine Lageplandarstellung angezeigt. Im Gegensatz zu der in Schritt S110 ausgeführten Auswertung ergibt die Auswertung der Sekundärmeldung lediglich eine relative Positionsbestimmung. Dies wird nachstehend noch näher beschrieben.

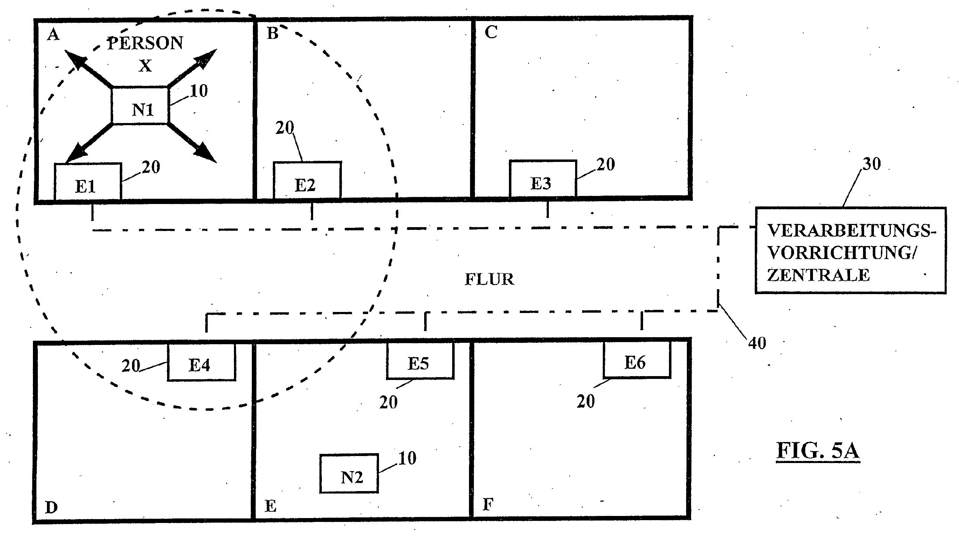

Es ist ersichtlich, dass die zentrale Verarbeitungsvorrichtung 30 in der Regel mehrere Meldungen über die Datenleitung 40 empfangen kann, nämlich eine Primärmeldung und zumindest eine Sekundärmeldung. In der nachfolgenden Beschreibung der Figuren 5A bis 5C sind verschiedene Anwendungsfälle sowie die jeweilige Verarbeitung der zentralen Verarbeitungsvorrichtung 30 gezeigt.

In den Figuren 5A bis 5C ist ein beispielhafter Aufbau eines Positionsbestimmungssystems gemäß dem in Fig. 1 gezeigten Positionsbestimmungssystem gezeigt, das einen Bereich überwacht, der sechs Räume A bis F mit Empfängern E1 bis E6 (Positionsempfangsvorrichtungen 20) und einen die Räume verbindenden Flur umfasst. Die sechs Empfänger E1 bis E6 sind jeweils über eine Datenleitung 40 mit einer in einem zentralen Überwachungsraum installierten zentralen Verarbeitungsvorrichtung 30 verbunden.

Des Weiteren sind in dem Beispiel zwei Sender N1, N2 (Positionssendevorrichtungen 10) gezeigt, die sich in verschiedenen Räumen (Raum A und Raum E) befinden und jeweils von Personen getragen werden.

Zunächst ist das Beispiel in Fig. 5A beschrieben. Betätigt die in Raum A befindliche Person X ihren Sender N1, um beispielsweise eine Notsituation zu melden und Hilfe anzufordern, wird zuerst das erste Signal ausgesendet (gestrichelte Ellipse). Abhängig von der Position der Person X bzw. des Senders N1 in den drei Raumkoordinaten innerhalb des'Raumes A (bzw. innerhalb des überwachten Bereichs) ist die Ausbreitung des ersten Signals unterschiedlich und somit die Reichweite des Senders N1 unterschiedlich. Wird beispielsweise ein HF-Funksignal verwendet, empfangen verschiedene Empfänger das Signal mit verschiedenen Signalstärken.

In dem in Fig. 5A gezeigten Beispiel empfangen die Empfänger E1, E2 und E4 das erste Signal mit ausreichender Signalstärke. Daraufhin werden in den drei
Empfängern E1, E2 und E4 die jeweiligen zweiten Empfangseinrichtungen 23 in Bereitschaft geschaltet.

Der Sender N1 sendet nun nach der ersten vorbestimmten Zeit das zweite Signal aus (durchgezogene Pfeile). Wird für das zweite Signal beispielsweise eine akustische Signalübertragung verwendet, schirmen die den Raum A umgebenden Wände das akustische Signal ab. Das heißt, innerhalb der zweiten vorbestimmten Zeit empfängt nur der Empfänger E1 das zweite Signal, wohingegen die'Empfänger E2 und E4 kein zweites Signal empfangen.

Die zentrale Verarbeitungsvorrichtung 30 empfängt also drei Meldungen, nämlich eine Primärmeldung von dem Empfänger E1 und zwei Sekundärmeldungen von den Empfängern E2 und E4.

Nun kann die zentrale Verarbeitungsvorrichtung 30 beispielsweise lediglich die Primärmeldung bei der Positionsbestimmung berücksichtigen und die zwei Sekundärmeldungen außer Acht lassen. Eine spezifische Positionsbestimmung ist möglich. Die Positionsbestimmung aus der Primärmeldung gemäß Fig. 5A ergibt: Sender N1 meldet Notfall in Raum A.

Das in Fig. 5B gezeigte Beispiel ist ähnlich zu dem in Fig. 5A beschriebenen Beispiel. Im Unterschied zu Fig. 5A befindet sich der Sender N1 hier in Raum B. Bei einer Betätigung des Senders N1 empfangen nun die Empfänger E2, E3 und E5 das erste Signal, wohingegen lediglich der Empfänger E2 das zweite Signal empfängt. Der Empfänger E2 sendet also die Primärmeldung, während die Empfänger E3 und E5 eine Sekundärmeldung senden. Nach der Verarbeitung der Meldungen liefert die Positionsbestimmung der zentralen Verarbeitungsvorrichtung 30 gemäß Fig. 5B also das Ergebnis: Sender N1 meldet Notfall in Raum B.

In Fig. 5C ist ein anderes Beispiel gezeigt. In dem in Fig. 5C gezeigten Beispiel befindet sich die den Sender N1 tragende Person X in keinem der mit einem Empfänger E1 bis E6 ausgerüsteten Räume A bis F, sondern in dem Flur, der keinen Empfänger aufweist.

Wird in dem in Fig. 5C gezeigten Beispiel der Sender N1 von der Person X betätigt, so empfangen beispielsweise die Empfänger E2, E3, E5 und E6 das erste Signal. Sendet dagegen der Sender N1 das zweite Signal aus, so wird aufgrund der Abschirmung durch die Wände das zweite Signal von keinem der Empfänger E2, E3, E5 und E6 empfangen.

Das heißt, alle Empfänger E2, E3, E5 und E6 senden eine Sekundärmeldung an die zentrale Verarbeitungsvorrichtung 30. Da der zentralen Verarbeitungsvorrichtung 30 nun keine Primärmeldung zur Verfügung steht, werden die in den Sekundärmeldungen enthaltenen Informationen für eine Positionsbestimmung verwendet. Es ist lediglich eine relative Positionsbestimmung möglich. Die Positionsbestimmung aus den Sekundärmeldungen gemäß Fig. 5C ergibt: Sender N1 meldet Notfall im Bereich der Räume B, C, E und F.

Gegebenenfalls ist es möglich, diese Positionsbestimmung zu verbessern, indem eine Bewertung der Tatsache vorgenommen wird, dass keine Primärmeldung empfangen wurde. Dies lässt den Rückschluss zu, dass sich der Sender N1 in keinem Raum mit einem Empfänger E1 bis E6 befindet. Durch einen Vergleich von in der zentralen Verarbeitungsvorrichtung gespeicherten Orten ohne Empfänger, die sich beispielsweise in der Nähe der Empfänger befinden, die eine Sekundärmeldung abgegeben haben, kann die relative Positionsbestimmung verbessert werden: Sender N1 meldet Notfall in Flur im Bereich der Räume B, C, E und F.

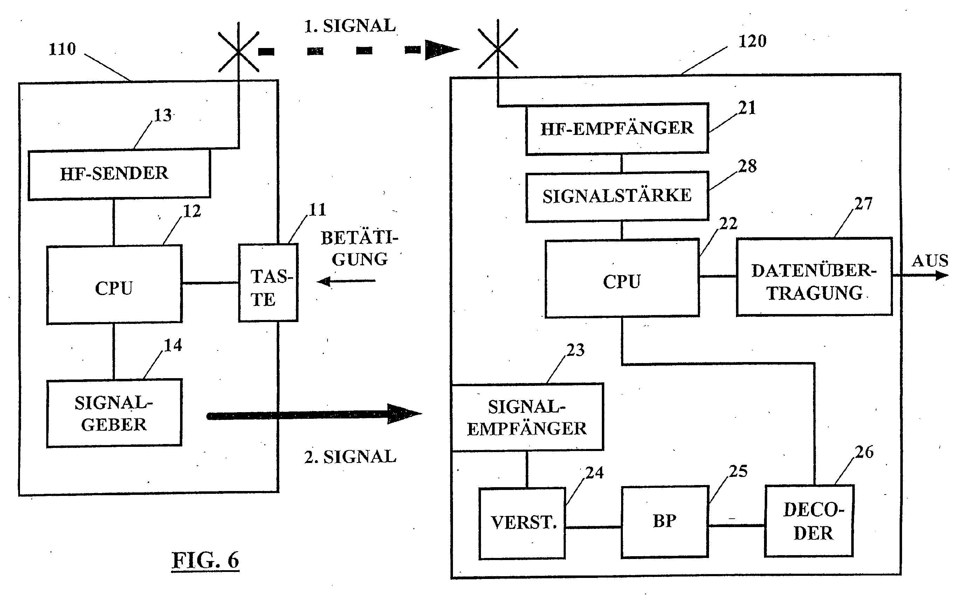

In Fig. 6 ist ein zweites Ausführungsbeispiel veranschaulicht.

In Fig. 6 sind eine mit Bezugszeichen 110 bezeichnete Positionssendevorrichtung und eine mit Bezugszeichen 120 bezeichnete Positionsempfangsvorrichtung gezeigt.

Die Positionssendevorrichtung 110 entspricht dabei im Wesentlichen der in Fig. 2 gezeigten Positionssendevorrichtung 10. Auf eine nähere Beschreibung wird daher verzichtet.

Die Positionsempfangsvorrichtung 120 entspricht in vielen Teilen der Positionsempfangsvorrichtung 20 gemäß Fig. 2. Gleiche Teile sind dabei mit gleichen Bezugszeichen versehen und auf eine nähere Beschreibung dieser Teile wird hier verzichtet.

Der Unterschied zwischen der in Fig. 2 gezeigten Positionsempfangsvorrichtung 20 und der in Fig. 6 gezeigten Positionsempfangsvorrichtung 120 liegt in einer mit Bezugszeichen 28 bezeichneten Einrichtung zur Messung der Signalstärke des ersten Signals. Die Signalstärke-Messeinrichtung 28 kann dabei als eigenständiges Element oder als Teil der ersten Empfangseinrichtung 21 oder der Verarbeitungseinrichtung 22 vorliegen.

Wird von der Positionsempfangsvorrichtung 120 mittels der ersten Empfangseinrichtung 21 das erste Signal empfangen (beispielsweise ein HF-Funksignal), so bestimmt die Signalstärke-Messeinrichtung 28 die Stärke des empfangenen Signals. Der Verarbeitungseinrichtung 22 werden neben dem durch das erste Signal übermittelten ersten Datentelegramm von der Signalstärke-Messeinrichtung 28 Informationen zugeführt, die die gemessene Stärke des ersten Signals bei dem Empfang darstellen.

Die Verarbeitungseinrichtung 22 wertet die die Signalstärke darstellenden Informationen aus und überträgt sie zu der zentralen Verarbeitungsvorrichtung 30. Die Übertragung zu der zentralen Verarbeitungsvorrichtung 30 kann entweder als separate Meldung erfolgen, oder aber vorzugsweise im Rahmen der zu übertragenden Primärmeldung oder Sekundärmeldung. Die Primärmeldung oder Sekundärmeldung wird in diesem Fall um ein weiteres Informationselement erweitert.

In der zentralen Verarbeitungsvorrichtung 30 werden die die Signalstärke darstellenden Informationen ausgewertet und bei der Positionsbestimmung berücksichtigt. So kann beispielsweise unter Verwendung einer Vergleichstabelle, die zu diesem Zweck zuvor bei der zentralen Verarbeitungsvorrichtung zu speichern ist, einer gemessenen Signalstärke eine bestimmte Entfernung der Positionssendevorrichtung 110 von der Positionsempfangsvorrichtung 120 zugewiesen werden. Hierdurch wird eine genauere Positionsbestimmung möglich.

Die Wirkungsweise und Vorteile des in Fig. 6 veranschaulichten Ausführungsbeispiels werden insbesondere bei dem in Fig. 5C gezeigten Fall deutlich.

Wie es vorstehend beschrieben ist, empfängt in dem Fall gemäß Fig. 5C die zentrale Verarbeitungsvorrichtung 30 lediglich Sekundärmeldungen von den Empfängern E2, E3, E5 und E6. Werden nun gemäß dem zweiten Ausführungsbeispiel jeweils die empfangene Signalstärke darstellende Informationen von den Empfängern E2, E3, E5 und E6 übertragen, so kann die zentrale Verarbeitungsvorrichtung 30 Entfernungen von den jeweiligen Empfängern ermitteln und verarbeiten. Beispielsweise werden dann nur die Sekundärmeldungen von den zwei Empfängern bei der Positionsbestimmung berücksichtigt, die die höchste Signalstärke aufweisen (d.h. die am nächsten an dem Sendef N1 sind). In dem in Fig. 5C gezeigten Fall lautet dann die Positionsbestimmung aus den Sekundärmeldungen unter Berücksichtigung der Signalstärke: Sender N1 meldet Notfall und befindet sich zwischen den Räumen C und E.

Eine entsprechende Visualisierung auf der Lageplandarstellung, beispielsweise mittels Entfernungskreisen, unterstützt eine schnelle Positionsbestimmung.

Auch bei den in den Figuren 5A und 5B gezeigten Fällen ist ein Einbeziehen der die Signalstärke darstellenden Informationen für eine genauere Positionsbestimmung verwendbar. Zwar ist durch die Primärmeldung, wie es vorstehend beschrieben ist, eine spezifische Positionsbestimmung möglich, diese kann aber durch die Berücksichtigung der gemessenen Signalstärke weiter verbessert werden. Wenn das erste Signal beispielsweise eine sehr hohe Signalstärke aufweist, befindet sich der Sender N1 in dem Fall gemäß Fig. 5A sehr nahe an dem Empfänger E1. Dies kann dann beispielsweise bei der Positionsbestimmung aus der Primärmeldung berücksichtigt werden: Sender N1 meldet Notfall in Raum A in unmittelbarer Nähe des Empfängers E1.

Ferner ist es gemäß einer Modifikation möglich, durch das Messen der empfangenen Signalstärke und das Vorsehen eines Schwellenwertes das Senden der Sekundärmeldung zu verhindern. Ist das empfangene Signal sehr schwach und liegt unter dem Schwellenwert, so kann die Verarbeitungseinrichtung 22 der Positionsempfangsvorrichtung 120 entscheiden, dass ein Senden der Sekundärmeldung nicht erfolgt. In diesem Fall ist nämlich davon auszugehen, dass sich die Positionsempfangsvorrichtung 120 in großer Entfernung von der das erste Signal sendenden Positionssendevorrichtung 110 befindet. Also sind andere Positionsempfangsvorrichtungen in dem System vorhanden, die ein stärkeres erstes Signal empfangen und gegebenenfalls sogar das zweite Signal empfangen (Primärmeldung). Daher ist die Verarbeitungseinrichtung 22 in der Lage, bei einer zu geringen Signalstärke das Senden der Sekundärmeldung als nicht erforderlich zu beurteilen und dementsprechend zu verhindern..Außerdem wird in diesem Fall die zweite Empfangseinrichtung 23 nicht in Bereitschaft geschaltet.

Das Verhindern des Sendens der Sekundärmeldung bei Unterschreiten einer Mindest-Signalstärke hat den Vorteil, dass weniger Sekundärmeldungen an die zentrale Verarbeitungsvorrichtung 30 von den Empfängern des Positionsbestimmungssystems gesendet werden. Nur die Empfänger, die sich in einer bestimmten Entfernung von dem Sender N1 befinden (die also eine Mindest-Signalstärke empfangen), senden entsprechende Meldungen. Hierdurch wird zum einen die Belastung des Übertragungssystems zwischen Empfängern und zentraler Verarbeitungsvorrichtung 30 verringert, insbesondere auf der Datenleitung 40, zum anderen sinkt die Belastung der zentralen Verarbeitungsvorrichtung 30 selbst, da bei der Positionsbestimmung weniger Meldungen ausgewertet werden müssen.

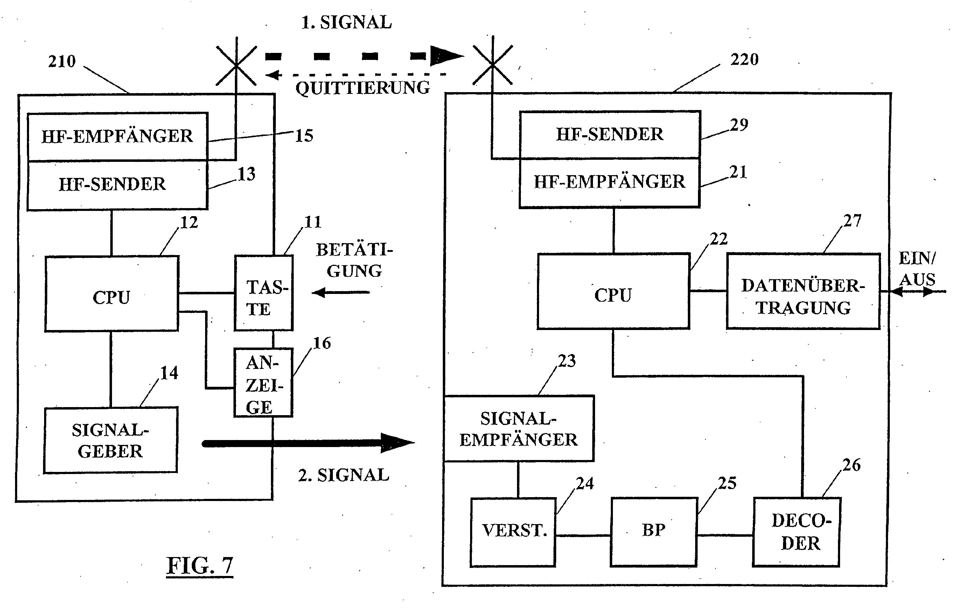

In Fig. 7 ist ein drittes Ausführungsbeispiel veranschaulicht.

In Fig. 7 sind eine mit Bezugszeichen 210 bezeichnete Positionssendevorrichtung und eine mit Bezugszeichen 220 bezeichnete Positionsempfangsvorrichtung gezeigt.

Die Positionssendevorrichtung 210 entspricht in vielen Teilen der in Fig. 2 gezeigten Positionssendevorrichtung 10. Gleiche Teile sind dabei mit gleichen Bezugszeichen versehen und.auf eine nähere Beschreibung dieser Teile wird hier verzichtet.

Die Positionsempfangsvorrichtung 220 entspricht in'vielen Teilen der Positionsempfangsvorrichtung 20 gemäß Fig. 2. Gleiche Teile sind dabei mit gleichen Bezugszeichen versehen und auf eine nähere Beschreibung dieser Teile wird hier verzichtet.

Der Unterschied zwischen der in Fig. 2 gezeigten Positionssendevorrichtung 10 und der in Fig. 7 gezeigten Positionssendevorrichtung 210 liegt in einer mit Bezugszeichen 15 bezeichneten Empfangseinrichtung und einer mit Bezugszeichen 16 bezeichneten Anzeigeeinrichtung. Die Empfangseinrichtung 15 kann dabei als eigenständiges Empfangsteil ausgebildet sein, oder mit der ersten Sendeeinrichtung 13 eine Sende- / Empfangseinrichtung bilden, die beispielsweise eine HF-Funksignalübertragung verwendet. Die Anzeigeeinrichtung 16 wird von der CPU 12 der Positionssendevorrichtung 210 angesteuert. Sie ist beispielsweise eine Leuchte wie eine Leuchtdiode bzw. LED, ein Summer zur Abgabe eines Tonsignals oder dergleichen.

Der Unterschied zwischen der in Fig. 2 gezeigten Positionsempfangsvorrichtung 20 und der in Fig. 7 gezeigten Positionsempfangsvorrichtung 220 liegt in einer mit Bezugszeichen 29 bezeichneten Sendeeinrichtung. Die Sendeeinrichtung 29 kann dabei als eigenständiges Sendeteil ausgebildet sein, oder mit der Empfangseinrichtung 21 eine Sende-/Empfangseinrichtung bilden, die beispielsweise eine HF-Funksignalübertragung verwendet. Die Sendeeinrichtung 29 der Positionsempfangsvorrichtung 220 und die Empfangseinrichtung 15 der Positionssendevorrichtung 210 sind aufeinander abgestimmt.

Mittels'des zweiten Ausführungsbeispiels ist es möglich, eine Quittierungsnachricht an die Positionssendevorrichtung 210 zu senden. Wenn die zentrale Verarbeitungsvorrichtung 30 die Position bestimmt hat, wird eine Bestätigungsnachricht für die sendende Positionssendevorrichtung 210 erzeugt und über die Datenleitung 40 an die Positionsempfangsvorrichtung 220 gesendet. Die Verarbeitungseinrichtung 22 der Positionsempfangsvorrichtung 220 wertet die Bestätigungsnachricht aus und sendet über die Sendeeinrichtung 29 eine Quittierungsnachricht zu der Positionssendevorrichtung 210. Dabei wird die Senderkennung der' Positionssendevorrichtung 210 verwendet (beispielsweise N1), um die Quittierungsnachricht lediglich an die entsprechende Positionssendevorrichtung 210 zu senden (beispielsweise durch entsprechende Codierung).

Die Empfangseinrichtung 15 der Positionssendevorrichtung 210 leitet die Quittierungsnachricht zu der CPU 12 der Positionssendevorrichtung 210 weiter'. Die CPU 12 wertet die Quittierungsnachricht aus und steuert die Anzeigeeinrichtung 16 an. Durch die Anzeigeeinrichtung 16 wird der Empfang der Quittierungsnachricht der Bedienungsperson (der Person X) angezeigt.

Liegt der zentralen Verarbeitungsvorrichtung 30 zur Positionsbestimmung eine Primärmeldung vor, so wird die Bestätigungsnachricht lediglich zu der Positionsempfangsvorrichtung 220 gesendet, die die Primärmeldung gesendet hat. In dem Fall gemäß Fig. 5A ist dies der Empfänger E1. Werden eine oder mehrere Sekundärmeldungen zur Positionsbestimmung verwendet, kann die zentrale Verarbeitungsvorrichtung 30 die Bestätigungsnachricht an irgendeine der die Sekundärmeldungen sendenden Positionsempfangsvorrichtungen senden. Ebenso kann die Bestätigungsnachricht an alle Positionsempfangsvorrichtungen gesendet werden. Im letzteren Fall werden mehrere Quittierungsnachrichten an die Positionssendevorrichtung 210 gesendet. Die CPU 12 bestimmt dann bei dem Empfang weiterer Quittierungsnachrichten, dass bereits eine' Quittierungsnachricht empfangen wurde sowie die Anzeigeeinrichtung 16 angesteuert wurde, und ignoriert diese weiteren Quittierungsnachrichten.

Ferner ist es möglich, anstelle der einfachen Anzeigeeinrichtung 16 auch eine (nicht gezeigte) Gegensprecheinrichtung für einen Gegenruf zu verwenden. In diesem Fall werden seitens der zentralen Verarbeitungsvorrichtung 30 anstatt der einfachen Bestätigungsnachricht Sprachsignale übertragen, die beispielsweise über ein Mikrofon von einer Überwachungsperson aufgenommen werden. Die Sprachsignale werden wie vorstehend beschrieben zu der Positionssendevorrichtung 210 übertragen. Dort werden die Sprachsignale dann beispielsweise über einen Lautsprecher (der die Anzeigeeinrichtung 16 ersetzt) in Tonsignale umgewandelt.

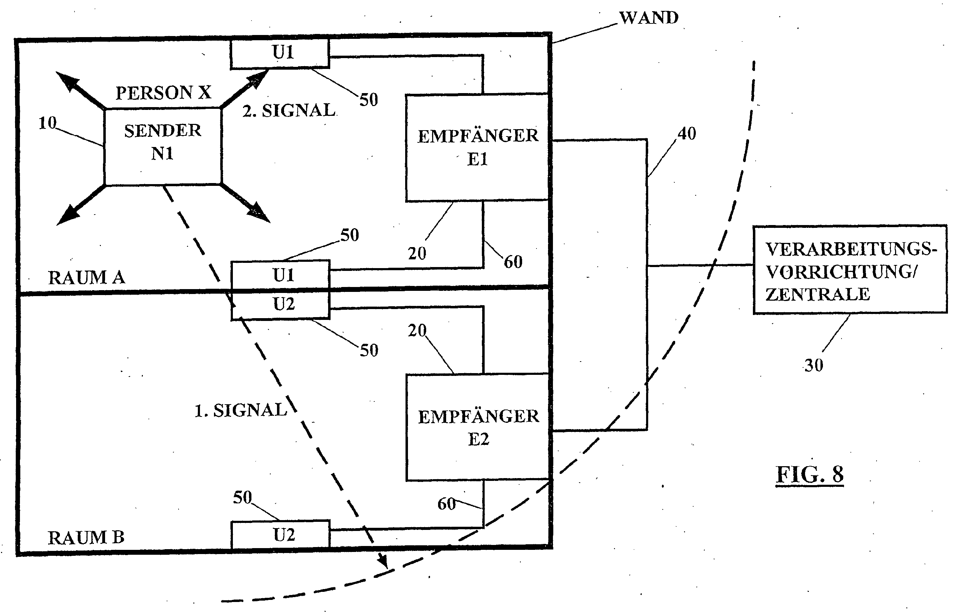

In Fig. 8 ist ein viertes Ausführungsbeispiel veranschaulicht.

In Fig. 8 ist ein Positionsbestimmungssystem gezeigt, das dem in Fig. 1 gezeigten Positionsbestimmungssystem in vielen Teilen entspricht. Gleiche Teile sind mit gleichen Bezugszeichen versehen und auf eine nähere Beschreibung wird verzichtet.

Im Unterschied zu dem in Fig. 1 gezeigten Positionsbestimmungssystem umfasst das in Fig. 8 gezeigte Positionsbestimmungssystem in jedem Raum A, B mit einer jeweiligen Positionsempfangsvorrichtung 20 verbundene Positionsempfangsuntereinheiten 50, die über eine (drahtgebundene oder drahtlose) Verbindung 60 Daten mit der jeweiligen Positionsempfangsvorrichtung 20 austauschen.

Die Positionsempfangsuntereinheiten 50 weisen einen ähnlichen Aufbau wie eine Positionsempfangsvorrichtung 20 auf. Das heißt, sie umfassen erste und zweite Empfangseinrichtungen zum Empfang des ersten und des zweiten Signals, eine Verarbeitungseinrichtung zur Verarbeitung der empfangenen Signale, eine Datenübertragungseinrichtung zum Senden von Daten und dergleichen.

Allerdings kommunizieren die Positionsempfangsuntereinheiten 50 (U1 bzw. U2) nur mit der jeweiligen (Haupt-)Positionsempfangsvorrichtung 20 (E1 bzw. E2). Dabei werden von den Verarbeitungseinrichtungen der Positionsempfangsuntereinheiten 50 auch keine Primärmeldung oder Sekundärmeldung erzeugt, sondern lediglich die durch das erste und gegebenenfalls durch das zweite Signal empfangenen Datentelegramme werden zu der Verarbeitungseinrichtung 22 der (Haupt-) Positionsempfangsvorrichtung 20 übertragen. Die Primärmeldung oder Sekundärmeldung wird weiterhin in der Verarbeitungseinrichtung 22 der (Haupt-) Positionsempfangsvorrichtung 20 erzeugt. Diese übernimmt auch weiterhin die Datenübertragung zu der zentralen Verarbeitungsvorrichtung 30.

Alternativ zu dem vorstehend genannten Aufbau kann die Steuerung der Positionsempfangsuntereinheit 50 durch die Verarbeitungseinrichtung 22 der (Haupt-) Positionsempfangsvorrichtung 20 übernommen werden. Eine eigene Verarbeitungseinrichtung der Positionsempfangsuntereinheiten 50 entfällt. Dies vereinfacht den Aufbau der Positionsempfangsuntereinheiten 50.

Durch eine geeignete Verteilung einer Positionsempfangsuntereinheit 50 oder mehrerer
Positionsempfangsuntereinheiten 50 in einem zu überwachenden Raum kann eine bessere Abdeckung erreicht werden. Insbesondere in Räumen, in denen ein Empfang des zweiten Signals beispielsweise durch herumstehende Gegenstände gestört werden kann, wird eine Verbesserung der Empfangssicherheit erreicht. Des Weiteren wird eine Redundanz gegen einen Ausfall einer Positionsempfangseinrichtung geschaffen.

Durch eine Einbeziehung einer Messung der Signalstärke des empfangenen ersten Signals ist eine weitere Verbesserung der Genauigkeit der Positionsbestimmung erreichbar. Hierzu werden von der (Haupt-) Positionsempfangsvorrichtung 20 zusätzlich noch Informationen zu der zentralen Verarbeitungsvorrichtung 30 gesendet, mit welcher,Stärke welche Positionsempfangsuntereinheit U1, U2 das erste Signal empfangen hat.

Ebenso kann zur Verbesserung der Genauigkeit der Positionsbestimmung die Stärke des empfangenen zweiten Signals (akustisches Signal) gemessen werden. Die in der (Haupt-) Positionsempfangsvorrichtung E1 und den Positionsempfangsuntereinheit U1 gemessenen Signalstärken des zweiten Signals werden äquivalent zu dem vorstehend beschriebenen Verfahren bei der Signalstärkemessung des ersten Signal verarbeitet und bei der Positionsbestimmung berücksichtigt.

Neben den vorstehend beschriebenen Beispielen sind auch noch weitere Modifikationen möglich.

So kann beispielsweise die Positionsempfangsvorrichtung eine Selbstüberwachungsfunktionalität aufweisen. Das heißt, jede Positionsempfangsvorrichtung überprüft beispielsweise periodisch, ob die erste und zweite Empfangseinrichtung betriebsbereit sind, d.h. ob das erste und das zweite Signal korrekt empfangen werden können. Ergibt die. Überprüfung, dass ein Fehler aufgetreten ist, wird dies umgehend der zentralen Verarbeitungsvorrichtung 30 gemeldet. Die zentrale Verarbeitungsvorrichtung 30 veranlasst dann eine Wartung der entsprechenden Positionsempfangsvorrichtung. Sollte in der Zwischenzeit ein Notruf von einer Positionssendevorrichtung in dem.Bereich der defekten Positionsempfangsvorrichtung abgegeben werden, so wird dieser, wie vorstehend beschrieben, auch von umgebenden Positionsempfangsvorrichtungen empfangen (zumindest das erste Signal). Bei der Auswertung der eingehenden Sekundärmeldungen wird dann beispielsweise der Ausfall der defekten Positionsempfangsvorrichtung berücksichtigt. Beispielsweise wird bei der Positionsbestimmung eine Alternativmeldung angegeben, dass sich der Sender (N1) in dem von der defekten Positionsempfangsvorrichtung überwachten Raum befinden kann (dass also eigentlich eine Primärmeldung von der defekten Positionsempfangsvorrichtung abgegeben worden wäre). Die zentrale Verarbeitungsvorrichtung 30 gibt eine dementsprechende Anzeige beispielsweise auf der Lageplandarstellung aus. Hierdurch wird das Auffinden der Person X auch im Falle einer defekten Positionsempfangsvorrichtung erleichtert.

Auch die Positionssendevorrichtung kann eine Selbstüberwachungsfunktion aufweisen und im Falle eines Defekts eine Warnung abgeben.

Des Weiteren kann die Positionssendevorrichtung bei der Betätigung einen Dauerton abgeben. In dem Fall, dass als zweites Signal ein akustisches Signal im hörbaren Bereich verwendet wird, kann der Dauerton und das zweite Signal miteinander gekoppelt sein. Hierdurch ist ein Auffinden der Person X erleichtert. Ferner kann zusätzlich eine Alarmierung umstehender Personen erreicht werden.

In einer Modifikation des dritten Ausführungsbeispiels gemäß Fig.. 7 ist es der zentralen Verarbeitungsvorrichtung 30 möglich, nach der Positionsbestimmung über die. Sendeeinrichtung 29 der Positionsempfangsvorrichtung 220 und die Empfangseinrichtung 15 der Positionssendevorrichtung 210 weitere Positionssendevorrichtungen anderer Personen anzusteuern und beispielsweise eine Sprachnachricht zu ihnen zu übertragens Hierdurch können die anderen Personen, die sich in der Nähe der den Notruf abgebenden Person X befinden, über den Notfall informiert werden und entsprechende Positionsinformationen erhalten. In dem in den Figuren 5A bis 5C gezeigten Fällen wird beispielsweise die sich in dem Raum E aufhaltende Person mit dem Sender N2 entsprechend alarmiert. Die Alarmierung erfolgt über eine Positionsempfangsvorrichtung (beispielsweise E5) oder alle Positionsempfangsvorrichtungen (E1 bis E6) in dem Positionsbestimmungssystem als allgemeiner Ruf an alle Positionssendevorrichtungen 210.

Zusätzlich kann das Positionsbestimmungssystem dahingehend modifiziert werden, dass zwischen den einzelnen Positionsempfangsvorrichtungen eine Verbindung zum Datenaustausch zwischen den Verarbeitungseinrichtungen 22 vorhanden ist. Falls eine Positionsempfangsvorrichtung das zweite Signal empfängt, also eine' Primärmeldung an zentrale Verarbeitungsvorrichtung 30 zur spezifischen Positionsbestimmung senden wird, meldet die entsprechende Verarbeitungseinrichtung 22 dies vorab an die anderen Positionsempfangsvorrichtungen. Diese können dann das Senden von entsprechenden Sekundärmeldungen verhindern. Diese Meldung muss vor dem Zeitpunkt t4 gemäß Fig. 3A oder 3B erfolgen. Hierdurch wird die Bearbeitungsbelastung der zentralen Verarbeitungsvorrichtung 30 und die Übertragungsbelastung auf der Datenleitung 40 verringert.

Obwohl vorstehend hauptsächlich eine HF-Funkübertragung für das erste Signal sowie eine akustische oder eine optische Übertragung für das zweite Signal beschrieben sind, ist es ersichtlich, dass auch andere Signalisierungsarten verwendet werden können. Es ist dabei lediglich zu beachten, dass das erste Signal nicht abgeschirmt.wird, während das zweite Signal abgeschirmt wird. Auch ist ein Vertauschen der Reihenfolge möglich. Das heißt, dass zuerst das zweite Signal gesendet wird, und dann das erste Signal.

Es ist ersichtlich, dass die vorstehend beschriebenen Ausführungsbeispiele und Modifikationen in beliebiger Weise kombiniert werden können. So kann beispielsweise das zweite und das dritte Ausführungsbeispiel oder das dritte und das vierte Ausführungsbeispiel kombiniert werden.

Wie es vorstehend beschrieben ist, wird ein Positionsbestimmungssystem zur Bestimmung einer Position vorgeschlagen. Das System umfasst eine oder mehrere Positionssendevorrichtungen 10, eine Positionsempfangsvorrichtung oder mehrere Positionsempfangsvorrichtungen 20 und eine zentrale Verarbeitungsvorrichtung 30. Ein erstes Signal wird von der Positionssendevorrichtung über einen ersten Signalweg zu der Positionsempfangsvorrichtung gesendet. Die Positionsempfangsvorrichtung empfängt das erste Signal und wertet es aus. Ein zweiter Signalweg wird vorbereitet. Die Positionssendevorrichtung sendet ein zweites Signal über den zweiten Signalweg bei einer ersten vorbestimmten Zeit t2. Die Positionsempfangsvorrichtung bestimmt, ob das zweite Signal in einer zweiten vorbestimmten Zeit t_{G} empfangen wird. Falls ja, wird eine Primärmeldung an die zentrale Verarbeitungsvorrichtung gesendet. Falls nein, wird eine Sekundärmeldung an die zentrale Verarbeitungsvorrichtung gesendet. Die zentrale Verarbeitungsvorrichtung bestimmt aus den empfangenen Meldungen die Position und zeigt diese an. Ferner werden ein Positionsbestimmungsverfahren, eine entsprechende Positionssendevorrichtung und eine entsprechende Positionsempfangsvorrichtung vorgeschlagen.

## Patentansprüche

1. Verfahren zum Bestimmen einer Position einer Positionssendevorrichtung (10), die mit einer Positionsempfangsvorrichtung oder mehreren Positionsempfangsvorrichtungen (20) kommuniziert, mit den Schritten
Senden (S30) eines ersten Signals über einen ersten Signalweg,
Empfangen und Verarbeiten (S40) des ersten Signals,
Vorbereiten (S50) eines zweiten Signalwegs,
Senden (S60) eines zweiten Signals über den zweiten Signalweg bei einer ersten vorbestimmten Zeit (t2) und
Bestimmen (S70), ob das zweite Signal über den zweiten Signalweg in einer zweiten vorbestimmten Zeit (t_{G}) empfangen wird,
wobei in dem Fall, dass das zweite Signal über den zweiten Datenweg in der zweiten vorbestimmten Zeit empfangen wird (S80), eine Primärmeldung erzeugt wird (S100) und die Primärmeldung zur Bestimmung der Position verarbeitet wird (S110).

2. Verfahren nach Anspruch 1, wobei in dem Fall, dass der Bestimmungsschritt (S70) ergibt, dass das zweite Signal nicht in der zweiten vorbestimmten Zeit empfangen wird, eine Sekundärmeldung erzeugt wird (S120) und die Sekundärmeldung zur Bestimmung der Position verarbeitet wird (S130).

3. Verfahren nach Anspruch 1, wobei die Primärmeldung eine durch das erste Signal übermittelte Kenninformation der Positionssendevorrichtung, eine in der Positionsempfangsvorrichtung gespeicherte Ortsinformation und eine Bestätigungsinformation über den Empfang des zweiten Signals umfasst.

4. Verfahren nach Anspruch 2, wobei die Sekundärmeldung eine durch das erste Signal übermittelte Kenninformation der Positionssendevorrichtung und eine in'der Positionsempfangsvorrichtung gespeicherte Ortsinformation umfasst.

5. Verfahren nach einem der vorhergehenden Ansprüche, mit einem Schritt zum Bestimmen (S40) der Signalstärke der Signale des ersten Signalwegs, wobei die Signalstärke darstellende Informationen bei der Verarbeitung zur Bestimmung der Position verwendet werden.

6. Verfahren nach einem der vorhergehenden Ansprüche, wobei bei dem ersten Signalweg ein Hochfrequenz-Funksignal verwendet wird und bei dem zweiten Signalweg ein akustisches oder optisches Signal verwendet wird.

7. Verfahren nach einem der vorhergehenden Ansprüche, wobei bei der Verarbeitung zur Bestimmung der Position eine Lageplandarstellung verwendet wird.

8. Verfahren nach einem der vorhergehenden Ansprüche, mit den Schritten
Senden einer Bestätigungsnachricht nach der Verarbeitung zur Bestimmung der Position an die Positionssendevorrichtung und
Signalisieren des Empfangs der Bestätigungsnachricht bei der Positionssendevorrichtung.

9. Verfahren nach einem der vorhergehenden Ansprüche, mit den Schritten
Überprüfen der Funktionalität der Positionsempfangsvorrichtung und
Melden des Ergebnisses der Überprüfung der Funktionalität der Positionsempfangsvorrichtung an eine zentrale Verarbeitungsvorrichtung.

10. Positionssendevorrichtung (10), die mit einer externen Positionsempfangsvorrichtung (20) kommuniziert, zur Bestimmung einer Position, mit
einer Betätigungseinrichtung (11),
einer Verarbeitungseinrichtung (12),
einer ersten Sendeeinrichtung (13) für einen ersten Signalweg und
einer zweiten Sendeeinrichtung (14) für einen zweiten Signalweg, wobei
die Verarbeitungseinrichtung in Reaktion auf eine Betätigung der Betätigungseinrichtung veranlasst, dass die erste Sendeeinrichtung ein erstes Signal an die Positionsempfangsvorrichtung sendet und dass bei einer ersten vorbestimmten Zeit (t2) die zweite Sendeeinrichtung ein zweites Signal an die Positionsempfangsvorrichtung sendet.

11. Positionssendevorrichtung nach Anspruch 10, wobei die erste Sendeeinrichtung eingerichtet ist, ein Hochfrequenz-Funksignal zu senden, und die zweite Sendeeinrichtung eingerichtet ist, ein akustisches Signal zu senden.

12. Positionssendevorrichtung nach Anspruch 10, wobei die erste Sendeeinrichtung eingerichtet ist, ein Hochfrequenz-Funksignal zu senden, und die zweite Sendeeinrichtung eingerichtet ist, ein optisches Signal zu senden.

13. Positionssendevorrichtung nach einem der Ansprüche 10 bis 12, mit
einer Empfangseinrichtung (15), die eingerichtet ist, eine Bestätigungsnachricht 'für eine Verarbeitung zur Bestimmung der Position zu empfangen, und
einer Signalisierungseinrichtung, die eingerichtet ist, den Empfang der Bestätigungsnachricht zu signalisieren.

14. Positionsempfangsvorrichtung (20), die mit einer externen Positionssendevorrichtung (10) und einer externen zentralen Verarbeitungsvorrichtung (30) kommuniziert, zur Bestimmung einer Position, mit
einer Verarbeitungseinrichtung (22),
einer ersten Empfangseinrichtung (21) zum Empfangen über einen ersten Signalweg,
einer zweiten Empfangseinrichtung (23) zum Empfangen über einen zweiten Signalweg und
einer Datenübertragungseinrichtung (27),
wobei die Verarbeitungseinrichtung eingerichtet ist, ein durch die erste Empfangseinrichtung empfangenes erstes Signal zu verarbeiten, die zweite Empfangseinrichtung in Reaktion darauf für einen Empfang vorzubereiten und zu bestimmen, ob das zweite Signal durch die zweite Empfangseinrichtung in einer zweiten vorbestimmten Zeit (t_{G}) empfangen wird,
wobei in dem Fall, dass das zweite Signal durch die zweite Empfangseinrichtung in der zweiten vorbestimmten Zeit empfangen wird, eine Primärmeldung erzeugt wird und durch die Datenübertragungseinrichtung zu der externen zentralen Verarbeitungsvorrichtung zur Bestimmung der Position gesendet wird.

15. Positionsempfangsvorrichtung nach Anspruch 14, wobei in dem Fall, dass die Bestimmung ergibt, dass das zweite' Signal durch die zweite Empfangseinrichtung nicht in der zweiten vorbestimmten Zeit empfangen wird, die Verarbeitungseinrichtung eingerichtet ist, eine Sekundärmeldung zu erzeugen und durch die Datenübertragungseinrichtung zu der externen zentralen Verarbeitungsvorrichtung zur Bestimmung der Position zu senden.

16. Positionsempfangsvorrichtung nach Anspruch 14, wobei die Primärmeldung eine durch das erste Signal übermittelte Kenninformation der Positionssendevorrichtung, eine in der Positionsempfangsvorrichtung gespeicherte Ortsinformation und eine Bestätigungsinformation über den Empfang des zweiten Signals umfasst.

17. Positionsempfangsvorrichtung nach Anspruch 15, wobei die Sekundärmeldung eine durch das erste Signal übermittelte Kenninformation der Positionssendevorrichtung und eine in der Positionsempfangsvorrichtung gespeicherte Ortsinformation umfasst.

18. Positionsempfangsvorrichtung nach einem der Ansprüche 14 bis 17, mit einer Signalstärkebestimmungseinrichtung (28) zur Bestimmung der Signalstärke des ersten Signals, wobei die Signalstärke darstellende Informationen zu der externen zentralen Verarbeitungsvorrichtung zur Bestimmung der Position gesendet werden.

19. Positionsempfangsvorrichtung nach einem der Ansprüche 14 bis 18, mit
einer Positionsempfangsuntereinheit oder mehreren Positionsempfangsuntereinheiten (50), die in einem Raum verteilt sind und mit der Positionsempfangsvorrichtung verbunden sind, wobei jede Positionsempfangsuntereinheit eingerichtet ist, das erste Signal und das zweite Signal zu empfangen und an die Verarbeitungseinrichtung der Positionsempfangsvorrichtung weiterzuleiten.

20. Positionsempfangsvorrichtung nach Anspruch 19, wobei jede Positionsempfangsuntereinheit eingerichtet ist, die Signalstärke des ersten Signals zu bestimmen und die Signalstärke darstellende Informationen zu der Verarbeitungseinrichtung der Positionsempfangsvorrichtung zu senden.

21. Positionsempfangsvorrichtung nach einem der Ansprüche 14 bis 20, wobei die erste Empfangseinrichtung eingerichtet ist, Hochfrequenz-Funksignale zu empfangen, und die zweite Empfangseinrichtung eingerichtet ist, ein akustisches Signal zu empfangen.

22. Positionsempfangsvorrichtung nach einem der Ansprüche 14 bis 20, wobei die erste Empfangseinrichtung eingerichtet ist, Hochfrequenz-Funksignale zu empfangen, und die zweite Empfangseinrichtung eingerichtet ist, ein optisches Signal zu empfangen.

23. Positionsempfangsvorrichtung nach einem der Ansprüche 14 bis 22, mit einer Sendeeinrichtung (29), die eingerichtet ist, eine Bestätigungsnachricht für eine Verarbeitung zur Bestimmung der Position an die Positionssendevorrichtung in Reaktion auf eine Anweisung von der externen zentralen Verarbeitungsvorrichtung zu senden.

24. Positionsempfangsvorrichtung nach einem der Ansprüche 14 bis 23, wobei'die Verarbeitungseinrichtung eingerichtet ist, die Funktionalität der Positionsempfangsvorrichtung zu überprüfen und über die Datenübertragungseinrichtung das Ergebnis der Überprüfung der Funktionalität der Positionsempfangsvorrichtung an eine externe zentrale Verarbeitungsvorrichtung zu senden.

25. Positionsbestimmungssystem zur Bestimmung einer Position, mit
einer Positionssendevorrichtung (10),
einer Positionsempfangsvorrichtung oder mehreren Positionsempfangsvorrichtungen (20) und
einer zentralen Verarbeitungsvorrichtung (30),
wobei ein erstes Signal von der
Positionssendevorrichtung über einen ersten Signalweg zu der Positionsempfangsvorrichtung gesendet wird,
die Positionsempfangsvorrichtung das erste Signal empfängt und auswertet sowie in Reaktion auf die Auswertung den Empfang eines zweiten Signals über einen zweiten Signalweg vorbereitet,
die Positionssendevorrichtung das zweite Signal über den zweiten Signalweg bei einer ersten vorbestimmten Zeit (t2) sendet,
die Positionsempfangsvorrichtung bestimmt, ob das zweite Signal über den zweiten Signalweg in einer zweiten vorbestimmten Zeit (t_{G}) empfangen wird,
wobei in dem Fall, dass das zweite Signal über den zweiten Datenweg in der zweiten vorbestimmten Zeit empfangen wird, die Positionsempfangsvorrichtung eine Primärmeldung erzeugt und über eine Datenleitung (40) an die zentrale Verarbeitungsvorrichtung sendet, die zentrale Verarbeitungsvorrichtung die Primärmeldung zur Bestimmung der Position verarbeitet und die bestimmte Position anzeigt.

26. System nach Anspruch 25, wobei in dem Fall, dass die Positionsempfangsvorrichtung bestimmt, dass das zweite Signal nicht in der zweiten vorbestimmten Zeit empfangen wird, die Positionsempfangsvorrichtung eine Sekundärmeldung erzeugt und über die Datenleitung an die zentrale Verarbeitungsvorrichtung sendet, die zentrale Verarbeitungsvorrichtung die Sekundärmeldung zur Bestimmung der Position verarbeitet und die bestimmte Position anzeigt.

27. System nach Anspruch 25, wobei die Primärmeldung eine durch das erste Signal übermittelte Kenninformation der Positionssendevorrichtung, eine in der Positionsempfangsvorrichtung gespeicherte Ortsinformation und eine Bestätigungsinformation über den Empfang des zweiten Signals umfasst.

28. System nach Anspruch 26, wobei die Sekundärmeldung eine durch das erste Signal übermittelte Kenninformation der Positionssendevorrichtung und eine in der Positionsempfangsvorrichtung gespeicherte Ortsinformation umfasst.

29. System nach einem der Ansprüche 25 bis 28, wobei die Positionsempfangsvorrichtung eingerichtet ist, die Signalstärke des ersten Signals zu bestimmen sowie die Signalstärke darstellende Informationen an die zentrale Verarbeitungsvorrichtung zu senden, und die zentrale Verarbeitungsvorrichtung eingerichtet ist, die Position unter Berücksichtigung der die Signalstärke darstellenden Informationen zu bestimmen.

30. System nach einem der Ansprüche 25 bis 29, wobei die Positionsempfangsvorrichtung eine Positionsempfangsuntereinheit oder mehrere Positionsempfangsuntereinheiten (50) umfasst, die in einem Raum verteilt sind und mit der Positionsempfangsvorrichtung verbunden sind (60), wobei jede Positionsempfangsuntereinheit eingerichtet ist, das erste Signal und das zweite Signal zu empfangen und an die Positionsempfangsvorrichtung weiterzuleiten.

31. System nach Anspruch 30, wobei jede Positionsempfangsuntereinheit eingerichtet ist, die Signalstärke des ersten Signals zu bestimmen und die Signalstärke darstellende Informationen zu der Positionsempfangsvorrichtung zu senden, die die Informationen an die zentrale Verarbeitungsvorrichtung weiterleitet, und die zentrale Verarbeitungsvorrichtung eingerichtet ist, die Position unter Berücksichtigung der die Signalstärke darstellenden Informationen zu bestimmen.

32. System nach einem der Ansprüche 25 bis 31, wobei bei dem ersten Signalweg ein Hochfrequenz-Funksignal verwendet wird und bei dem zweiten Signalweg ein akustisches Signal verwendet wird.

33. System nach einem der Ansprüche 25 bis 31, wobei bei dem ersten Signalweg ein Hochfrequenz-Funksignal verwendet wird und bei dem zweiten Signalweg ein optisches Signal verwendet wird.

34. System nach einem der Ansprüche 25 bis 33, wobei die zentrale Verarbeitungsvorrichtung eine Lageplandarstellung umfasst, bei der die bestimmte Position dargestellt wird.

35. System nach einem der Ansprüche 25 bis 34, wobei
die zentrale Verarbeitungsvorrichtung eingerichtet ist, eine Bestätigungsmeldung nach der Bestimmung der Position über die Positionsempfangsvorrichtung an die Positionssendevorrichtung zu senden, und
die Positionssendevorrichtung eingerichtet ist, den Empfang der Bestätigungsmeldung zu signalisieren.

36. System nach einem der Ansprüche 25 bis 35, wobei
die Positionsempfangsvorrichtung eingerichtet ist, die Funktionalität der Positionsempfangsvorrichtung zu überprüfen und das Ergebnis der Überprüfung der Funktionalität der Positionsempfangsvorrichtung an die zentrale Verarbeitungsvorrichtung zu senden, und
die zentrale Verarbeitungsvorrichtung eingerichtet ist, die das gesendete Ergebnis zu verarbeiten und bei der Bestimmung der Position zu berücksichtigen.
